# EUROPEAN PATENT APPLICATION

(11) **EP 4 443 310 A1**
(43) Date of publication of application: **09.10.2024**
(21) Application number: 24168676.5
(22) Date of filing: 05.04.2024
(51) Int. Cl.: G06F 16/25, G06F 16/332

(54) **ARTIFICIAL INTELLIGENCE SYSTEM USER INTERFACES**

(30) Priority: 06.04.2023 US 202363494637 P; 18.04.2023 US 202363496898 P; 31.05.2023 US 202363505393 P
(71) Applicant: Palantir Technologies Inc., Denver, CO 80202 (US)
(72) Inventor: COPES, Martin, Denver, 80202 (US); TRACHE, Mohamed Zaki, Denver, 80202 (US); JEGANATHAN, Christopher, Denver, 80202 (US)
(74) Representative: Derry, Paul Stefan

(57) **Abstract**

A data orchestration system can be used to respond to natural language prompts (e.g., user submitted prompts) where the response involves a data processing workflow being executed using one or more data processing services (e.g., microservices of a data processing platform or software). This can provide for execution of data processing workflows (e.g., complex workflows) without a user needing to specify the particular data processing services that are included in the data processing workflows. This can cause new functionality to be available to a user (e.g., to a user who lacks the technical skillset to specify the relevant data processing services without use of the systems and methods disclosed herein), and/or can dramatically reduce the time required to orchestrate the data processing services that are included in the data processing workflows.

## Description

### FIELD

Implementations of the present disclosure relate to systems and techniques for improving user interactions with computer-based models. More specifically, implementations of the present disclosure relate to computerized systems and techniques that improve user interactions with large language models ("LLMs").

### BACKGROUND

Large language models are opaque, imprecise, and inconsistent in their replies, which make them good conversationalists but also difficult to debug when they are expected to perform consistently. Further, complex calls to an LLM can involve multiple back-and-forth responses, where previous responses may be used in downstream prompts, which may further complicate the consistency and predictability of results.

### SUMMARY

As discussed herein, an Artificial Intelligence System ("AIS") is configured to activate large language models (LLMs) and/or other artificial intelligence processes based on natural language prompts provided by a user via an interactive user interface. An AIS may select and execute appropriate data services, e.g., via plugins, which may be configured to communicate with proprietary and/or publicly available data sources, as well as LLMs and/or other artificial intelligence processes. This disclosure describes examples configurations and operations of AISs, including an AIS that is referred to as an orchestration system. Other AISs may include fewer, additional, and/or different components or functionality as described herein.

Various embodiments of the present disclosure provide improvements to various technologies and technological fields. For example, as described above, existing data storage and processing technology (including, e.g., in memory databases) is limited in various ways (e.g., manual data review is slow, costly, and less detailed; data is too voluminous; etc.), and various embodiments of the disclosure provide significant improvements over such technology. Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces.

Various combinations of the above and below recited features, embodiments, and aspects are also disclosed and contemplated by the present disclosure. Additional embodiments of the disclosure are described below in reference to the appended claims, which may serve as an additional summary of the disclosure.

### BRIEF DESCRIPTION OF THE DRAWINGS

The following drawings and the associated descriptions are provided to illustrate embodiments of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
Figure 1 is a block diagram illustrating an example Orchestrator Selector in communication with various devices to orchestrate data processing services in fulfillment of a user prompt.
Figure 2A is a flow diagram illustrating another example arrangement of components of an orchestration system.
Figure 2B is a block diagram illustrating one example of inputs to the selection module that may be used to select a Service Orchestrator.
Figure 3 is a flow diagram illustrating one example of some communications between components of an orchestration system.
Figure 4 illustrates an example user interface that shows the initial results provided by a service that was called by service orchestrator.
Figure 5 is an example user interface showing an example visualization of data returned from a service that was automatically selected and executed by the orchestration system in response to a user prompt.
Figure 6 is a user interface showing another example of an exploration pane and a decision graph after multiple user prompts have been processed by the orchestration system.
Figure 7 is a simplified diagram showing a computing system for implementing a system for solutions proposal workflow according to some embodiments of the present disclosure.
Figure 8 is a flowchart of one embodiment of an example method that includes selecting a services workflow and initiating execution of services therein.
Figure 9 is a flowchart of one embodiment of an example method that includes use of language models to generate a formatted query for a particular data processing service.
Figure 10 is a flowchart of one embodiment of an example method that includes identification of unsupported output/results from an orchestrator selection.
Figure 11 is a flowchart of one embodiment of an example method that includes requesting clarifying information from a user.
Figure 12 is a flowchart of one embodiment of an example method that includes generating content, such as for an email.
Figure 13 illustrates an example user interface according to various implementations.
Figure 14 illustrates an example user interface having an interaction pane configured to receive input from a user and provide output to the user.
Figure 15 illustrates an example user interface according to various implementations.
Figure 16 illustrates an example user interface which shows updates to the user interface (Figure 15) responsive to submission of the user prompt "Can you create a graph of the product types" provides in user input area of user interface.
Figure 17 is a diagram illustrating relationships between a decision graph and information that is provided in a first panel and second, split-view, panel.
Figure 18 is a flow diagram illustrating one example of some communications and interactions between components of a system.
Figure 19 is a flowchart of one embodiment of an example method that includes displaying indications of one or more utilized plugins, such as dynamically as the plugins are accessed.

### DETAILED DESCRIPTION

Although certain preferred embodiments and examples are disclosed below, inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain embodiments; however, the order of description should not be construed to imply that these operations are order dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

**Model:** any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("Al") models, machine learning ("ML") models, multimodal models (e.g., models or combinations of models that can accept inputs of multiple modalities, such as images and text), and/or the like.

**Language Model:** any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence ("Al") algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

**Large Language Model ("LLM"):** any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality. LLMs can be extremely useful for natural language processing, including receiving natural language prompts and providing natural language responses based on the text on which the model is trained. LLMs may not be data security- or data permissions-aware, because they generally do not retain permissions information associated with the text upon which they are trained. Thus, responses provided by LLMs may be limited to any particular permissions-based portion of the model.

While certain aspects and implementations are discussed herein with reference to use of a language model, LLM, and/or Artificial Intelligence ("Al"), those aspects and implementations may be performed by any other language model, LLM, AI, machine learning, neural network, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

**Data Processing Service** (or "Service" or "Plug-in"): receives and responds to requests for data and/or data processing. A Plug-in may be accessible via an API that is exposed to an Orchestrator Selector (and/or other remote systems) and allows data processing requests to be received via API calls from Service Orchestrators. A few examples of services or plug-ins include a table search service, a filter service, an object search service, a text search service, or any other appropriate search service, indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other data retrieval, processing, and/or analysis function.

**Prompt (or "Natural Language Prompt"):** a phrase, question, or statement written in a human language (e.g., English, Chinese, Spanish, etc.) that serves as a starting point for a language model and/or other language processing. A natural language prompt may be generated based on user input and/or automatically by a language model, for example. A User Prompt (or "user input") is a type of Prompt that is provided by a user and indicates a task, such as a request for data that may be accessed and/or processed by one or more services. A user prompt does not need to indicate a specific service to use in fulfilling the request. User input can include a request for data, such as data accessed and/or processed by one or more services. User input can indicate one or more tools associated with the user request or task which may facilitate performing the task. User input can indicate one or more data object types associated with a tool. User input can indicate one or more actions associated with a tool. User input can include a user selection of a format for a response from an LLM. A user prompt may be supplemented by the AIS to generate a prompt that is sent to the LLM.

**Orchestration System:** A general reference to components that perform various (e.g., some or all) of the processes discusses herein. An example Orchestration System includes an Orchestrator Selector and multiple Service Orchestrators that are in communication with various services. An Orchestration System is an example implementation of an Artificial Intelligence System ("AIS").

**Orchestrator Selector:** Receives a user input (e.g., a natural language query in text or audio format) and maps characteristics of the user prompt with a particular service (e.g., plug-in). The Orchestrator selector may be trained based on a training set, such as a listing of example natural language prompts that are associated with specific Service Orchestrators (and/or services). To select Service Orchestrators associated with a user prompt, the Orchestrator Selector may transmit the user prompt (or a portion of the user prompt) and a training data set (or "training file") to an LLM. In some embodiments, the training data set may be filtered prior to sending to the LLM, such as based on semantic analysis, to reduce the number of services that are relevant to the user prompt, e.g., from 1000 available services to 20 services that are most relevant to the user query. For example, a training file that includes only a limited quantity of the example user prompts and associated Service Orchestrators may be generated and transmitted to the LLM as part of a request for selection of a Service Orchestrator.

**Service Orchestrator (or "Tool"):** generates and makes a request to a service for fulfillment (at least partial) of a user prompt. For example, a Service Orchestrator may generate a formatted query (e.g., in a format understandable by the selected service) based on a natural language data processing task. In some embodiments, information associated with each data processing service, e.g., in a service specifications file, indicates the inputs, parameters, formats, etc. of requests accepted by the service and/or generated as responses to queries. For example, a service specifications file for a first service may include information regarding functionality of the first service, information regarding a query format associated with the first service, and/or examples of formatted queries and/or data formats associated with the first service.

A Service Orchestrator (or Tool) may include a set of logic or rules that can be provided to an LLM that the LLM can use to obtain additional information, such as by generating a request for access to additional data via a plug-in. Thus, a tool can be used by an LLM to generate requests (that may be fulfilled by the AIS) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, and apply action tool. Tools, or the set of logic they comprise for performing one or more operations, may be defined by a system, external database, ontology and/or a user.

**Tool Information:** can include information associated with a tool that is provided to an LLM and is usable to implement the tool functionality. Tool information can indicate how data is structured, such as in an ontology. Tool information can indicate properties associated with a particular data object type, such as a data object type associated with a selected tool. Tool information can include instructions for implementing a tool. Tool information can include instructions for generating a tool call to use the tool, including instructions for formatting a tool call. In some implementations, tool information can comprise tool implementation examples for executing one or more tool operations which can include pre-defined examples, user-selected examples, user-generated examples, and/or examples that are automatically dynamically configured based on context.

**Management module:** communicates with the Service Orchestrator(s) identified by the Orchestrator Selector to initiate performance of corresponding data processing services in the appropriate sequence. The Management module may also receive processed data from Service Orchestrators (e.g., after performance of a service by an API call by the Service Orchestrator) and coordinates further requests to Service Orchestrators or providing result data to user.

**Context:** any information associated with user inputs, prompts, responses, etc. that are generated and/or communicated to/from the user, the artificial intelligence system, the LLM, the data processing services, and/or any other device or system. For example, context may include a conversation history of all of the user inputs, prompts, and responses of a user session. Context may be provided to an LLM to help an LLM understand the meaning of and/or to process a prompt, such as a specific piece of text within a prompt. Context can include information associated with a user, user session, or some other characteristic, which may be stored and/or managed by a context module.

**Context module:** stores and manages context associated with a user, user session, or some other characteristic. As noted above, context may include all or part of a conversation history from one or more sessions with the user (e.g., a sequence of user prompts and orchestrator selector responses or results, and/or user selections (e.g., via a point and click interface or other graphical user interface). Thus, context may include one or more of: previous analyses performed by the user, previous prompts provided by the user, previous conversation of the user with the language model, schema of data being analyzed, a role of the user, a context of the data processing system (e.g., the field), and/or other contextual information.

The context module may provide all or only a relevant portion of context to a selection module for use in selecting one or more Service Orchestrators, to Service Orchestrators for use in generating a properly formatted service request, and/or other components of an Orchestration System. In some embodiments, context may include identification of services and parameters of prior operations, but not underlying data that was accessed or retrieved by the service (e.g., use of graph visualization service and graph parameters without indicating the data illustrated in the graph). In some embodiments, context may include some or all of the underlying data accessed or retrieved by the service.

Thus, additional services may be added to the system by including a new service specifications file in the set of available service specification files. In some embodiments, a Service Orchestrator makes use of an LLM to generate a service request that is properly formed for the particular service.

**Ontology:** stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types.

**Data Object (or "Object"):** a data container for information representing a specific thing in the world that has a number of definable properties. For example, a data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth.

**Object Type:** a type of a data object (e.g., person, event, document, and/or the like). Object types may be defined by an ontology and may be modified or updated to include additional object types. An object definition (e.g., in an ontology) may include how the object is related to other objects, such as being a sub-object type of another object type (e.g., an agent may be a sub-object type of a person object type), and the properties the object type may have.

### Example System

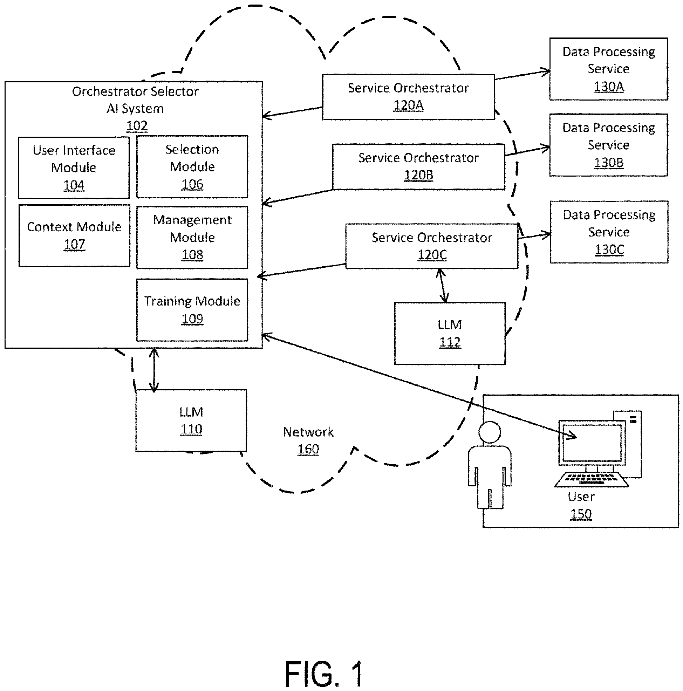

**Figure 1** is a block diagram illustrating an example **Orchestrator Selector 102** (also referred to as an AIS) in communication with various devices to orchestrate data processing services in fulfillment of a user prompt. As discussed in further detail below, the Orchestrator Selector 102 and Service Orchestrators 120 (e.g., part of an "Orchestration System") generally coordinates tasks of determining (1) what service to use to respond to a user prompt and (2) how to setup and execute a request to a corresponding service.

In the example of Figure 1, the various devices are in communication via a network 160, which may include any combination of networks, such as a local area network (LAN), personal area network (PAN), wide area network (WAN), the Internet, and/or any other communication network. In some embodiments, modules of the illustrated components, such as modules 104-109 of the Orchestrator Selector 102, may communicate via an internal bus and/or via the network 160.

In this example, a user 150 (which generally refers to a computing device of any type that is operated by a human user) provides a prompt to the Orchestrator Selector indicating a natural language request for some data analysis to be performed, such as based on a set of object types that the user also selected. In some embodiments, the user may select one or more object types to limit processing by the orchestration system to only those selected object types (which may increase speed and relevance of responses provided by the orchestration system), while in other embodiments the user may not provide any information except an initial prompt. The Orchestrator Selector 102 may then communicate with a LLM 110, which may include one or more large language models, to determine one or more Service Orchestrators 120 (which refers generally to one or some combination of 120A, 120B, 120C, and/or any number of Service Orchestrators) that should be called to fulfill some or all of a user prompt. The Service Orchestrators 120 may then make the actual request to the corresponding data processing service 130. The data processing services 130 (which refers generally to one or some combination of 130A, 130B, 130C, and/or any number of additional data processing services) are configured to receive and responds to requests for data and/or data processing. In some embodiments, a data processing service 130 may have an API that is exposed to Service Orchestrators and allows data processing requests to be received via API calls from Service Orchestrators 120. In some embodiments, a user prompt, e.g., an initial user prompt, may indicate a data object type (or "object type").

Each of the **Service Orchestrators 120** may make use of one or more data processing services 130 to implement it's corresponding functionality. The Service Orchestrators may select the appropriate service type and format for a corresponding data processing service 130 by selecting the services from a master list shared by one or more Service Orchestrators 120 or from a list that is custom to the particular Service Orchestrator 120. In some embodiments, different Service Orchestrators 120 make use of a same service (e.g., the service 130A may be used by each of the Service Orchestrator 120A and 120B). The Service Orchestrators 120 may include or may be able to access one or more protocols for communicating with their related services 130, such as to provide instructions to the service to implement one or more specified data processing tasks. Examples of Service Orchestrators may include:
- "VISUAL": a visualization functionality used to generate and/or display visual components such as graphs, charts, maps, etc.
- "FILTER": a filtering functionality used to filter and/or search a set of objects, tables, or other data items.
- "SELECT_MODEL": a functionality used to select and/or run machine learning models on the given set of inputs (e.g., on a given set of objects), and to obtain model outputs (e.g., predictions).
- "JOIN": a functionality used to join a first table of objects with another table of objects (e.g., a related table).
- "ACTION": a functionality used to recommend and/or implement a set of one or more actions that can be taken on a set of entities (e.g., an object set). In some embodiments the actions are selected from a list of available action types. The action types may include, for example, writing to datasets (e.g., adding or updating rows of a table, editing or updating an object type, updating parameter values for an object instance, generating a new object instance), implementing integrated applications (e.g., an email or SMS application), or communicating with external application programming interfaces (APIs) e.g., via webhooks. In some embodiments the actions may be Actions as defined in an Ontology, discussed in more detail below.

- "RESOURCE": a functionality used to identify pre-existing resources (e.g., resources built for a specific workflow).
- "UPDATE": a functionality used to update or edit a field/property in a set of object instances. In some embodiments the UPDATE Service Orchestrator manages this specific task as a separate functionality from the ACTION service.
- "DOCS": a functionality used to respond to user questions (e.g., about how to use software, or about what certain identified code is for) where the response makes use of documentation (e.g., documentation for software or code).
- "UNSUPPORTED": a functionality used to indicate the system cannot or will not fulfill the user request (e.g., if the system determines that fulfilling the request would violate ethical rules, or if the system does not have sufficient confidence that it understands the request). The UNSUPPORTED functionality may provide a message to the user indicating that the request is unsupported.

The Service Orchestrators 120 may include and/or have access to one or more large language model (LLM) or other language model, and the LLM may be fine-tuned or trained on appropriate training data (e.g., annotated data showing correct or incorrect pairings of natural language strings, such as a natural language strings passed to the Service Orchestrator 120, to inputs for relevant service APIs). In the example of Figure 1, the Service Orchestrator 120C is in communication with an LLM 112. Each of the Service Orchestrators 120 may additionally communicate with LLM 112 and/or other LLMs. In some embodiments, the Service Orchestrators 120 access the same LLM that is used by the Orchestrator Selector 102, such as both accessing LLM 110. For example, a service generation request transmitted to the LLM 112 associated with a filtering operation may include training data including a list of example natural language prompts and corresponding formats of filtering parameters accepted by the filtering service, along with the user prompt and/or context. In some embodiments, the training data may include a text file with example inputs replaced with actual user inputs and sample object types with actual object types. The LLM 112 may return a JSON file that may be parsed into a service API call, for example.

As another example, a service formatting request to the LLM 112 associated with a visualization service may include an indication of a particular visualization type (e.g., table) and a listing of data types to include in columns of the table, along with the user prompt and/or contacts. A service generation request may include information regarding the user, such as user role or permissions of the user, which may be used in determining the appropriate tasks to request in a formatted query to the service.

The data processing services 130 may include any quantity of services and any available type of service. For example, the services 130 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other services.

The result that is provided to a user (in response to a query formed based on the initial user prompt or in response to a subsequent query) may include text, images, maps, interactive graphical user interfaces, datasets, database items, audio, actions, or other types or formats of information. In some embodiments, an action may only be executed subject to a further confirmation from a user, thus providing important oversight of the AI-powered system. Actions may include writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. For example, results provided to a user (e.g., via the User interface module 104) may include a message indicating that the request is unsupported (e.g., the selection module 106 mapped the user prompt and/or context to an "unsupported" service orchestrator), or a message indicating that more information or clarification is needed to process the request. The result may include a fully or partially built application or dashboard, generated by services 130 that were implemented in response to the user request.

In the example of Figure 1, the Orchestrator Selector 102 includes multiple modules that perform various functions and may communicate with one another and/or outside devices. Depending on the embodiment, the functionality of the various modules may be combined into fewer modules or separated into additional modules. Additionally, in some embodiments an Orchestrator Selector may not include all of the modules and/or functionality discussed herein with reference to particular modules.

The **training module 109** is configured to maintain and provide training data to the LLM 110 for training and/or retraining of the LLM 110. In some embodiments, training data is included in a prompt that is sent to the LLM and is used by the LLM only for generating a response to that prompt. In other implementations, training data may be used to actually fine-tune or adjust the LLM so future prompts received by the LLM may be affected by the previously received training data. In some embodiments, a generic language model may be fine-tuned to turn it into a selector that can map a natural language prompt into a specific Service Orchestrator and/or data processing services, such as by including training data in a prompt that is sent to the LLM. In one example, the training module 109 may maintain a list of example natural language prompts that are associated with specific Service Orchestrators and initiate generation or update of the LLM 110 based on that training data. For example, the training data may include example user prompts that are associated with particular Service Orchestrators. Below are a few examples of associations between user prompts and corresponding Service Orchestrators:

| Example User prompts | Example Service Orchestrators |
|---|---|
| Show me all flights departing from SNA today | Filter |
| Create a map of all flights | Visual |
| I How do I get the pilot's information? | Docs |

For example, training data that includes example user prompts and associated Service Orchestrators may be generated and transmitted to the LLM as part of a request for selection of a Service Orchestrator. Advantageously, the LLM 110 may be trained to identify similar user prompts across multiple dialects, phrasings, and with reference to any type of object (e.g., other types of product or service objects).

A **user interface module 104** is configured to generate user interface data that may be rendered on the user device 150, such as to receive an initial user prompt, as well as later user prompts that may be used to initiate further data processing services and various visualizations of data returned from one or more data processing services. In some embodiments, the functionality discussed with reference to the user interface module 104, and/or any other user interface functionality discussed herein, may be performed by a device or service outside of the Orchestrator Selector 102 and/or the user interface module 104 may be outside the Orchestrator Selector 102.

A **context module 107** is configured to store and make available any context associated with a user prompt, user session, or multiple sessions of the user. Similarly, the context module 107 may store context for various groups of users, e.g., user prompts from multiple users. The Orchestrator Selector 102, the Service Orchestrators 120, and/or other components of the system may make use of context in fulfilling their functions. Context may include, for example, all or part of a conversation history from one or more sessions with the user (e.g., a sequence of user prompts and Orchestrator Selector 102 responses or results), user selections (e.g., via a point and click interface or other graphical user interface), data processing services 130 implemented during the session, user-selected objects and any corresponding properties for those objects, any linked objects as defined by a relevant ontology, and the like. As one example, if a most recent result returned to a user included a filtered set of "flight" objects, and a user types "send an email listing the flights to my manager," the orchestration system may make use of the context of the filtered set of aircraft objects and include a list of those objects in an email. The email content, addressee and/or subject line, may also be generated using an appropriate LLM integrated in the orchestration system.

The Service Orchestrators 120 may also make use of context passed by the Orchestrator Selector 102 when selecting appropriate services 130 to service a request. Each Service Orchestrator 120 may, in some embodiments, have its own specific set of rules and/or algorithms for determining which portion of the received context is relevant, and may make use of only the relevant context for that specific Service Orchestrator 120. In other embodiments, the context module 107 of the Orchestrator Selector 102 may have sets of rules and/or algorithms for determining which portion of the context is relevant to which Service Orchestrator 120, and may only pass the relevant context to the appropriate Service Orchestrator 120. In some embodiments, validity of a user query or formatted query may be determined by an LLM query, such as based on training data that includes example user prompts ("show me all air carriers") that are associated with a response type of "further clarification needed", which causes the LLM to return a request for further information from the user. The training data may include an example of the actual request for further information that may be provided to the user, such as "What does it mean for a flight to be an 'air carrier'?" The response to a clarification question may then be added to the user prompt and/or context and provided back to the service orchestrator for execution of the corresponding service.

In some embodiments, the user interface module 104 may suggest certain actions to the user (e.g., any actions described herein, or any other appropriate actions that include data processing) based on the context (e.g., email the account manager of the account that is being displayed).

A **selection module 106** is configured to receive a user prompt, along with context, and query the LLM 110 for output of a Service Orchestrator. Thus, with reference to the example user prompts and related Service Orchestrators noted above, if a user prompt is "show me all flights departing from SNA today," the selection module 106 may query the LLM 110 with that user prompt, or some subset of the user prompt, and possibly training data, and the LLM 110 returns an indication that a "Filter" Service Orchestrator matches the natural language query provided. In some embodiments, the selection module 106 may determine multiple Service Orchestrators associated with a single user prompt. For example, the selection module 106 and/or the LLM 110 may determine that a sequence of Service Orchestrators should be called to fulfill a task indicated in a user input. As one example, a user can enter a prompt such as "I've just received this email [input full email text] from one of my suppliers. Which of my distribution centers will be short of supplies this week? Show them to me on a map with relevant tables and notes," and the selection module 106 may select, in response to one or more calls to the LLM 110, multiple data processing services including Filter, Join, and Visual for execution by the orchestration system.

As discussed elsewhere, the data services selection and execution may be performed on an iterative basis. For example, a response to the user's initial prompt may be provided (based on execution of a Service Orchestrator 120 to perform some data processing of a data processing service 130) and then the user may provide a further prompt, or the output from the LLM may indicate that a further service call should be performed, that initiates further processing, starting with the selection module 106 selecting another Service Orchestrator 120 to perform another data processing task. In one example, after a user is provided with information responsive to the initial prompt noted above, the user may then submit a follow-up prompt indicating "draft and send an email to the relevant distribution centers updating them on this," which causes the selection module 106 to initiate selection of one or more matching Service Orchestrators. As another example, the selection module 106 may map a query saying "show me the relevant objects on a map", to an ordered sequence of Service Orchestrators including (i) a Service Orchestrator that manages a functionality of filtering objects, and (ii) a Service Orchestrator that manages a functionality of providing graphical visualizations.

A **management module 108** communicates with the Service Orchestrators 120. In an embodiment where a workflow including multiple Service Orchestrators 120 are identified by the selection module 106, the management module 108 communicates with each of the Service Orchestrators 120 in the appropriate sequence (and/or concurrently) to fulfill the multiple data processing tasks. In the example above where the selection module 106 maps a query to a (i) filter and a (ii) visual service, the Orchestrator Selector 102 (via the management module 108) may provide a first Service Orchestrator 120A that manages the functionality of filtering objects with a filtering request. That Service Orchestrator 120A may implement the corresponding services via communication with a filtering data processing service 130A (e.g., the Service Orchestrator 120A may use an API of the corresponding data processing service 130A). The data processing service 130A may then perform the requested filtering operation and return the result (with or without additional processing, as appropriate) to the Service Orchestrator 120A. The Orchestrator Selector 102 (e.g., the selection module 106 in communication with the LLM 110) may then include the result in a (e.g., subsequent) query to another Service Orchestrator 120B that manages the functionality of visualizations. That Service Orchestrator 120B may implement the corresponding visualization services (e.g., the Service Orchestrator 120B may use an API of an appropriate visualization service 130B, such as a dashboard-building service), and may return the result (with or without additional processing, as appropriate) to the Service Orchestrator 120B. The Service Orchestrator 120B may make use of this result in responding to the original query. The original user prompt, request from the Service Orchestrator 120A, response from data processing service 130A, subsequent query, request from Service Orchestrator 120B, response from visualization service 130B, and/or any other information associated with the selection and performance of data processing tasks may be part of the context.

While the above-described example involves use of multiple Service Orchestrators 120 in responding to a user prompt submitted to the Orchestrator Selector 102, in some implementations only one Service Orchestrator 120 is involved in generating a response and responding to the user prompt.

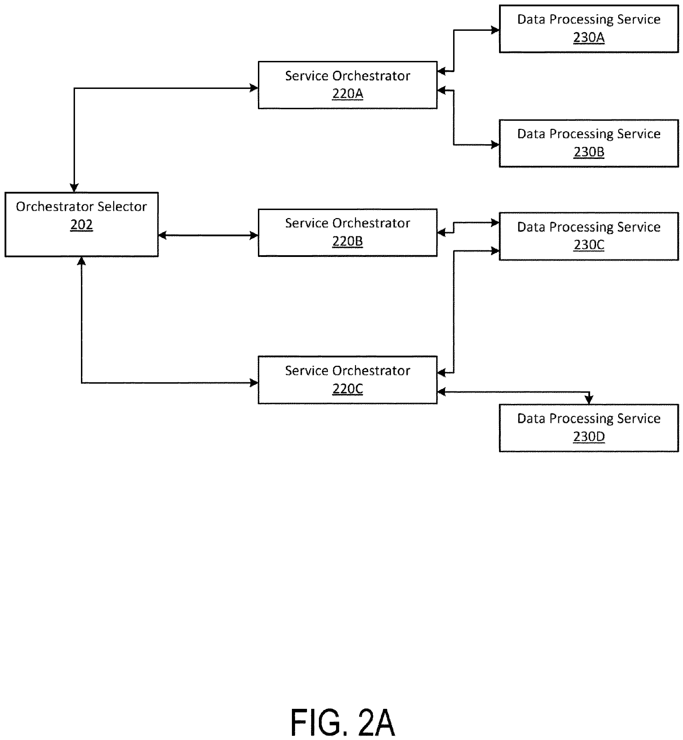

**Figure 2A** is a flow diagram illustrating another example arrangement of components of an orchestration system. In this example, an Orchestrator Selector 202 communicates with three service orchestrators 220A, 220B, 220C, which in turn communicate with data processing services 230A, 230B, 230C, 230D. In this example, Service Orchestrator 220A is configured to communicate with multiple data processing services 230A and 230B. Similarly, service orchestrator 220C is configured to communicate with each of data processing service 230C and 230D. In some implementations, other one-to-many relationship (e.g., 1 to 3, 1 to 4, etc.) between service orchestrator 220 and data processing services 230 may be implemented. The example of Figure 2A also illustrates the data processing service 230C configured to communicate with multiple service orchestrators 220B and 220C. In some implementations, any other many-to-one relationship (e.g., 3 to 1, 4 to 1, etc.) between service orchestrators and data processing services may be implemented. Additionally, other relationships, such as any suitable many to many relationships, between service orchestrators 220 and data processing services 230 are possible.

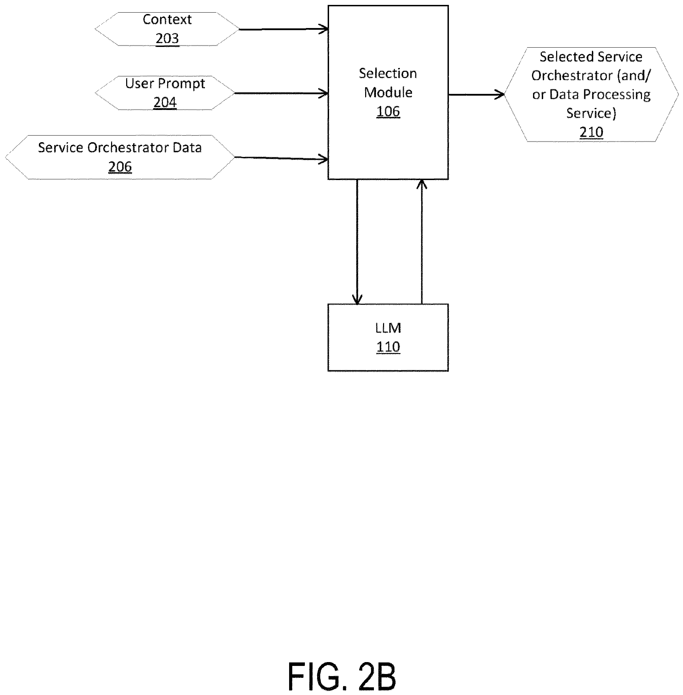

**Figure 2B** is a block diagram illustrating one example of inputs to the selection module 106 (Figure 1) that may be used to select a Service Orchestrator. In this example, the selection module 106 receives and/or has access to context 203, user prompt 204, and Service Orchestrator data 206. As noted above, the context may include various types and forms of information that are usable to optimize the service selection process. For example, context may include all or part of a conversation history from one or more sessions with the user, responses from services implemented during the session, user-selected objects and any corresponding properties, and/or other related data.

The user prompt 204 may include a textual description provided by the user, whether by direct input from the user (e.g., typing a textual prompt or speaking the prompt for voice to text conversion) or using other input modalities to generate a user prompt (e.g., clicking on an automatically generated example user prompt of multiple example user prompts). The Service Orchestrator data 206 generally includes information regarding available Service Orchestrators (and their corresponding services).

The selection module 106, as discussed above, sends requests to the LLM 110 for selection of a Service Orchestrator. A request to the LLM 110 may include any portion of the available inputs (e.g., context 203 and user prompt 204), along with training data that provides the LLM 110 with information usable to select the most relevant Service Orchestrator. In some embodiments, the training data transmitted to the LLM 110 includes a list of sample user prompts and associated Service Orchestrators (and/or corresponding services). In some embodiments, the list of Service Orchestrators included in the training data is limited to the Service Orchestrators that are available, as may be indicated in the Service Orchestrator data 206. The LLM 110 returns an indication of a selected Service Orchestrator, or in some embodiments may return a list of two or more of the top ranked Service Orchestrators. The selection module 106 may provide the selected Service Orchestrator to the management module 108, which communicates directly with the Service Orchestrator 120.

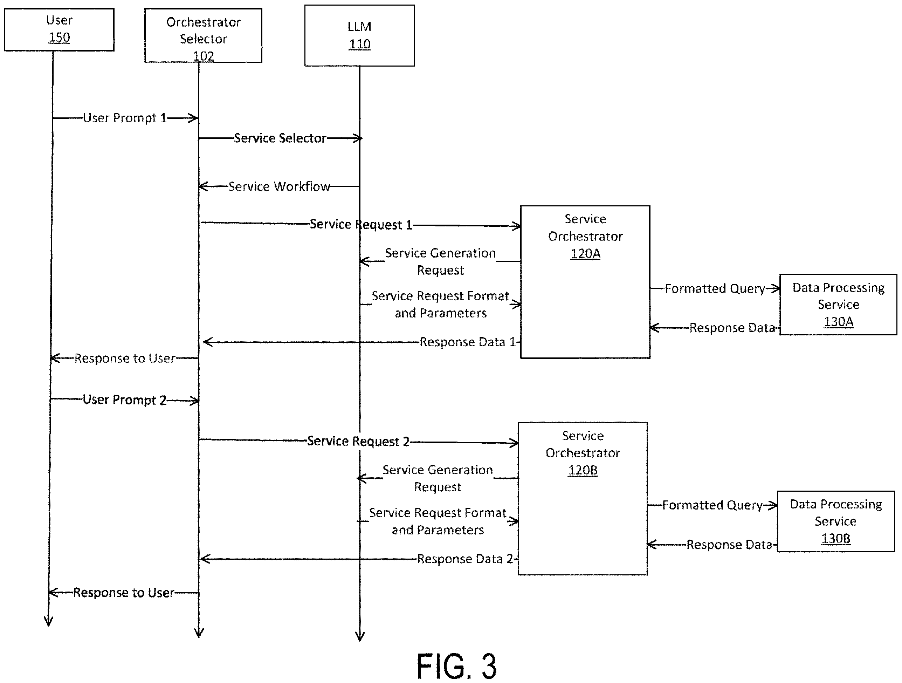

**Figure 3** is a flow diagram illustrating one example of some communications between components of an orchestration system. The indicated workflow of Figure 3 is exemplary of only certain communications and is not meant to include all possible communication channels and participants.

In the example of Figure 3, the process begins with a user prompt 1 being transmitted to an Orchestrator Selector 102, such as via a user interface provided to the user 150. As noted above, the user prompt may be a natural language prompt that requests processing of data. The Orchestrator Selector 102 then generates and sends a service selector request to the LLM 110. The service selector request may include some or all of the user prompt 1 and/or any context that is relevant to the service selector request, along with training data, such as a document that includes example natural language user prompts and associated Service Orchestrators. The LLM 110 returns a service workflow, which may include one or more selected Service Orchestrators.

The Orchestrator Selector 102 may then transmit service request 1 to the selected Service Orchestrator, Service Orchestrator 120A in this example. The Service Orchestrator 120A is configured to communicate with the data processing service 130A to provide a particular service. A service specifications file that indicates format, parameters, etc. of service requests sent to the data processing service 130A, may be provided to the LLM 110 in a service generation request, along with some or all of the user prompt and/or context. The LLM 110 may return service request format and parameters for generating the service request (e.g., in a JSON or similar file format) and/or the actual formatted query that is properly formatted and includes the correct parameters, which may be forwarded by the Service Orchestrator 120A to the data processing service 130A.

The data processing service 130A fulfills the service request and returns response data. The Service Orchestrator 120A may then perform one or more validation checks on the response data to determine if any of the response data is possibly invalid, and, e.g., further user input should be requested. The Service Orchestrator 120A may then transmit response data 1 to the Orchestrator Selector 102, which provides the response data to the user 150, such as via text or graphics.

The user may then provide another user prompt, user prompt 2, that initiates a similar workflow, now with additional context associated with the initial user prompt, service request, response data, etc. This general process may continue indefinitely, with the user providing further prompts and the orchestration system determining appropriate Service Orchestrators, formatting and sending service requests, and providing relevant portions of the response data to the user.

### Example User Interfaces

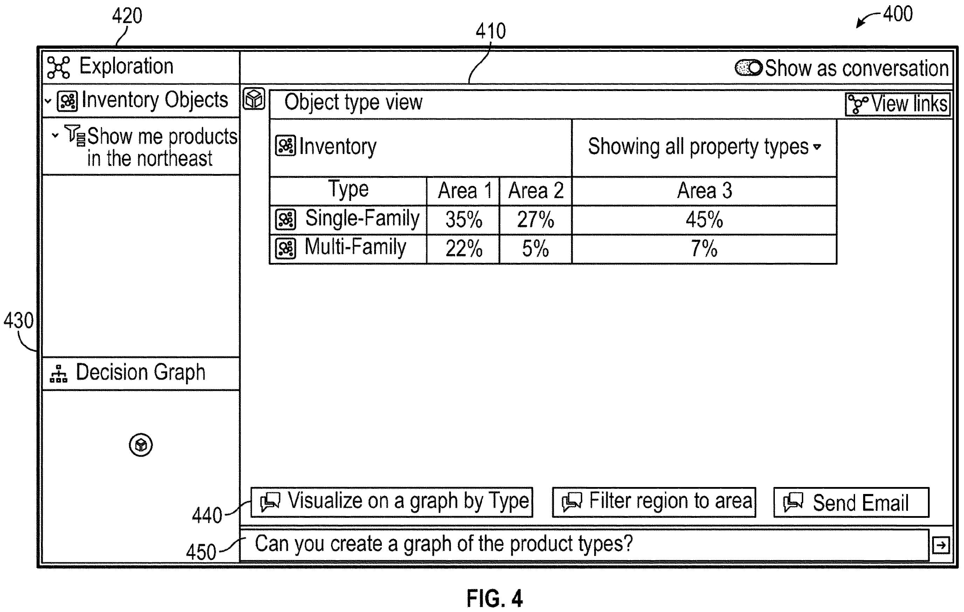

In some embodiments, the orchestration system may include or provide for a graphical user interface for interacting with the orchestration system, and allows for users to input natural language prompts, and/or visualize and interact with responses. **Figure 4** illustrates an example user interface 400 that shows the initial results provided by a service that was called by service orchestrator. In this example, the user interface 400 includes an interaction pane 410, exploration pane 420, decision graph 430, prompt helpers 440, and input area 450. The interaction pane 410 includes results from performance of one or more services, such as based on natural language inputs provided by the user or object type filtering. The exploration pane 420 includes a session history of user inputs, such as including natural language prompts and/or user selections made within the graphical user interface. In this example, each item in the chain may include an indicator (e.g., an icon or other visual indicator) that indicates one or more Service Orchestrators and/or services that were used to service the corresponding request. In the example of Figure 4, the user interface 400 includes a decision graph 430 showing decisions the user took, e.g., different follow-up prompts, analyses, etc. that the user provided.

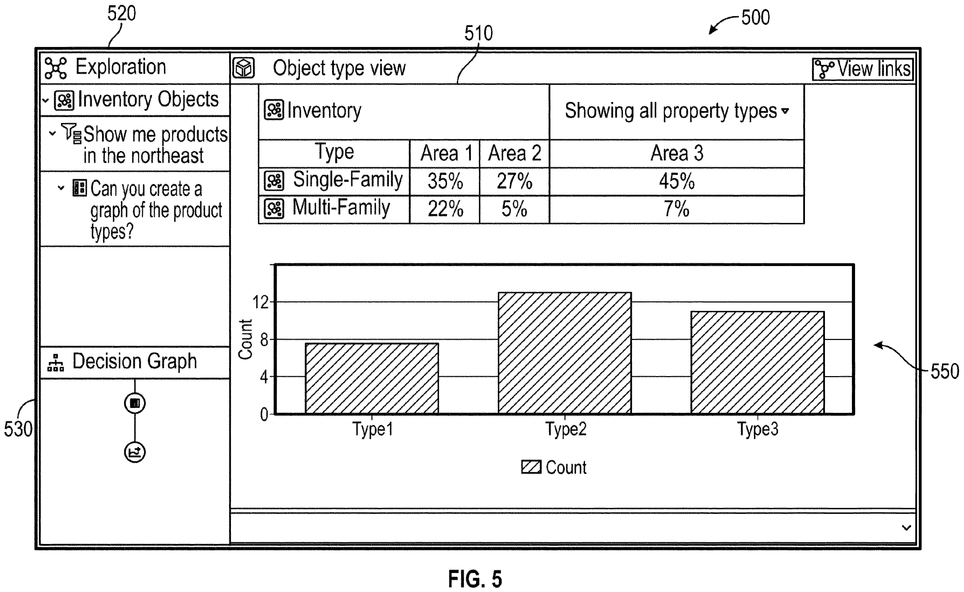

**Figure 5** is an example user interface 500 showing an example visualization of data returned from a service that was automatically selected and executed by the orchestration system in response to the prompt provided in the input area 450 of user interface 400, and in consideration of the context associated with the example of Figure 4. In this example, the exploration pane 520 is updated from the exploration pane 420 to include the most recent user prompt (e.g., "Can you create a graph of the product types"). Similarly, the decision graph 530 is updated from the decision graph 430 to indicate the requested graphing visualization. The interaction pane 510 shows some of the earlier results provided in interaction pane 410 (e.g., as they scroll off the top of the user interface area) and includes results from the latest user prompt in the form of a bar chart 550.

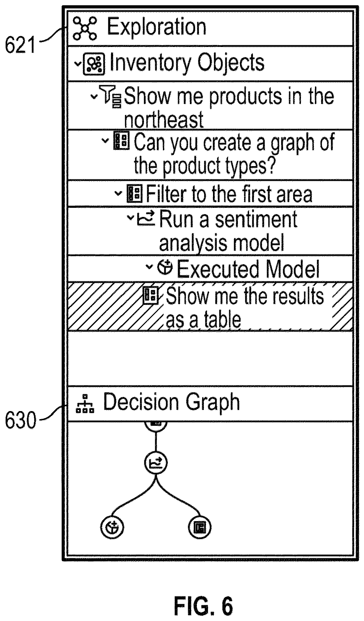

**Figure 6** is a user interface showing another example of an exploration pane 621 and a decision graph 630 after multiple user prompts have been processed by the orchestration system. In this example, the decision graph 630 shows a session history of user inputs including natural language prompts and/or user selections made within the graphical user interface and/or results returned to the user. The decision graph 630 branches to indicate that multiple results are returned, such as in response to a user returning to a previous branch in the history and providing a different user prompt. In some implementations, multiple options may be provided to the user as prompt helpers 440 (or in other formats) and each of the options may appear in the decision graph. When the user selects one of the options, the decision graph may end at the unselected branch(es) and continue down the selected branch.

### Example Plugin Monitor

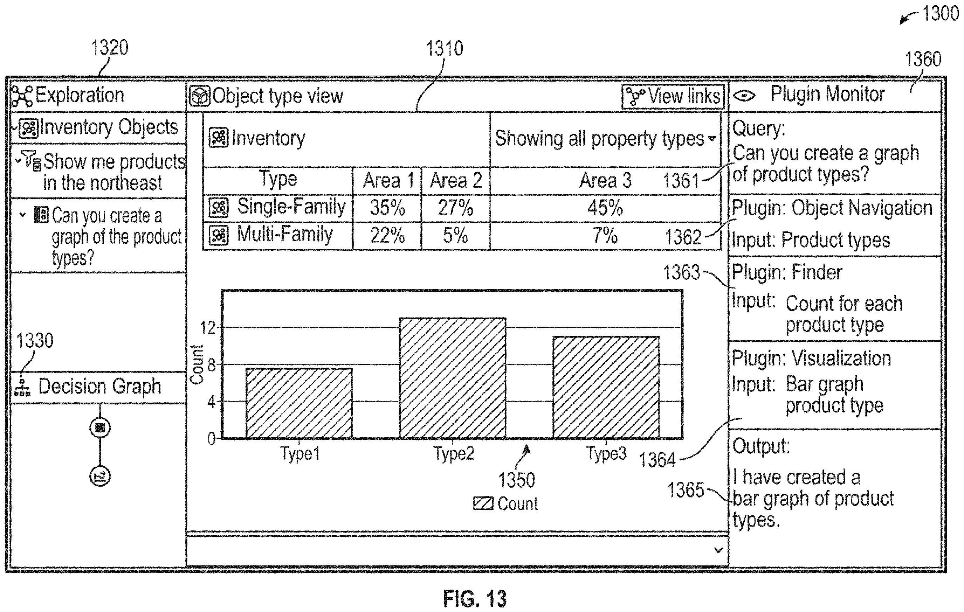

**Figure 13** illustrates an example user interface 1300 according to various implementations. The example user interface 1300 includes an interaction pane 1310, an exploration pane 1320, and a plugin monitor panel 1360. As discussed above, the interaction pane 1310 includes visualizations of data returned from multiple services that may be automatically selected and executed by the system in response to one or more user prompts provided in the input area 450 of user interface 400, and in consideration of the context associated with the example of Figure 4. The user interface 1300 includes a plugin monitor panel 1360, which may comprise one or more graphical display elements (e.g., an icon or other visual indicator). According to various implementations, the plugin monitor panel 1360 may indicate information about plugins (or services) that have been performed by the system, such as to indicate an input to a plugin and an output from a plugin. For example, graphical display element 1362 may indicate that a language model has utilized an "Object Navigation" plugin and provided an input of "product types." In various implementations, the plugin monitor panel 1360 may dynamically update as specific plugins are utilized, thereby displaying in real-time tasks performed by a language model (and/or other components of the system, such as the orchestration system).

In this example, the plugin monitor panel 1360 includes graphical display elements 1361, 1362, 1363, 1364, and 1365. Graphical display element 1361 displays a prompt that was provided in the input area 450 of user interface 400, for example. Graphical display elements 1362, 1363, and 1364 display a name of a plugin and a corresponding input to said plugin. Graphical display element 1365 displays an output from the language model, such as may be returned via an orchestrator selector.

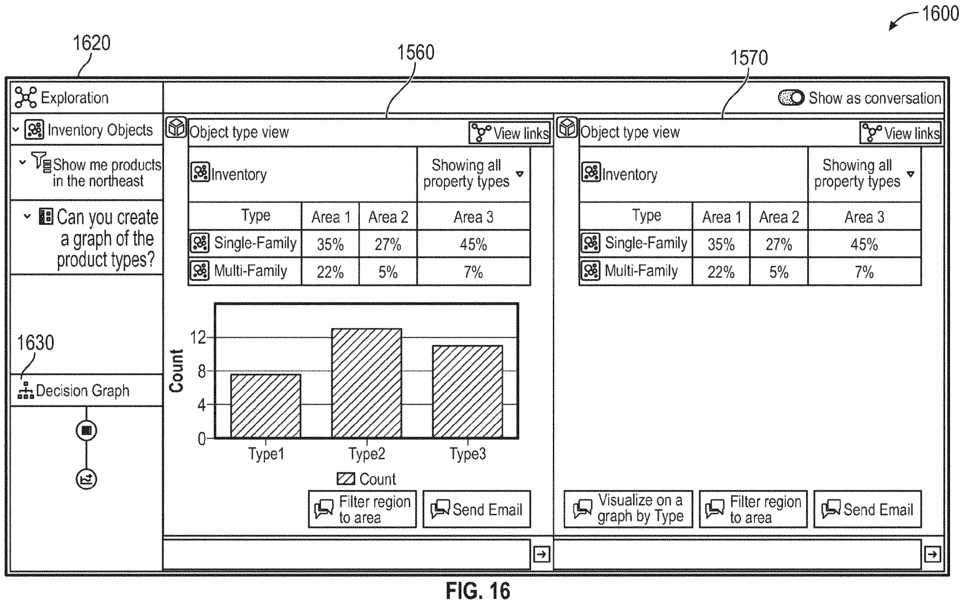

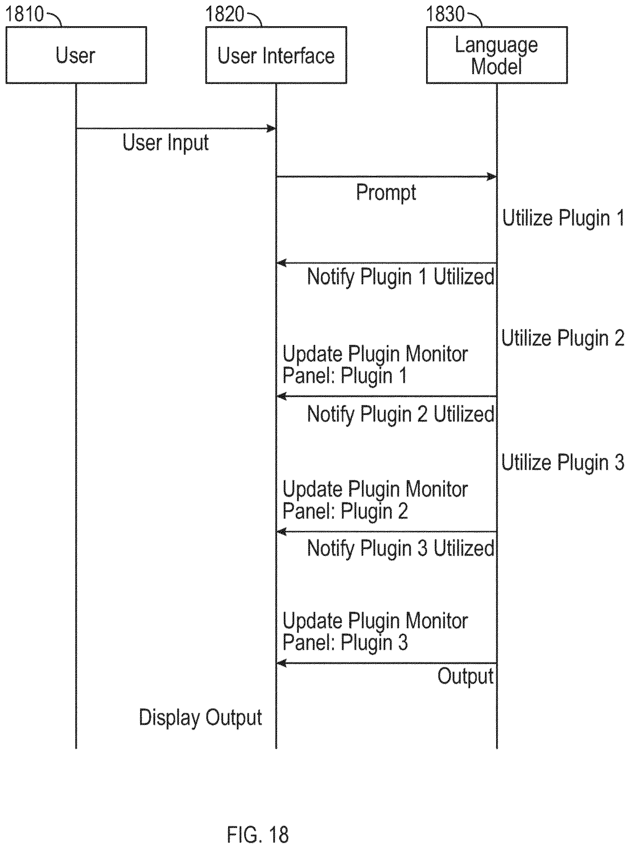

**Figure 18** is a flow diagram illustrating one example of some communications and interactions between components of a system. The indicated workflow of Figure 16 is exemplary of only certain communications and is not meant to include all possible communication channels and participants.

In the example of Figure 18, the process begins with a user input being provided to a user interface 1820, such as through an interaction with a user 1810. The user input may be a natural language prompt that requests processing of data. The user interface 1820 then provides a prompt to a language model 1830. In some implementations, the prompt provided to the language model 1830 may be the same as the user input. In some implementations, the prompt provided to the language model 1830 may be different from the user input, such as a prompt generated based on at least the user input. For example, the prompt may include some or all of the user input, any context that is relevant to the user input, and/or training data.

The language model 1830 may then begin to process the prompt, including by utilizing various plugins. In some embodiments, the orchestration system determines multiple plug-ins that will be utilized in response to a user prompt, and may then instruct the language model to complete those multiple services (plugins), such as in series and/or in parallel. In some embodiments, the language model may automatically determine which of multiple available plug-ins should be utilized, and the language model may automatically (without further input from the system) interact with those multiple plug-ins. In some embodiments, the output from one plug-in is used to determine one or more additional plug-ins to execute, and such determination may be performed by the language model (e.g., based on rules or criteria included in the prompt provided to the language model) and/or by the orchestration system.

In the example of Figure 18, based on the initial user input, a prompt is provided to the language model 1830, which then causes the language model to utilize plugin 1. The language model 1830 may then notify, either directly or indirectly, the user interface 1820 that plugin 1 was utilized. In response to receiving such a notification, the user interface 1820 may update a plugin monitor panel to indicate that plugin 1 was utilized (for example, as shown in Figure 13). As shown in Figure 18, as the language model 1830 may utilize additional plugins 2 and 3. The language model may then notify, either directly or indirectly, the user interface 1820 that plugins 2 and 3 were utilized. In response to receiving such notifications, the user interface 1820 may update the plugin monitor panel to indicate that plugins 2 and 3 were utilized. The language model 1830 may transmit or communicate, either directly or indirectly, an output to the user interface 1820. The user interface 1820 may then display the output.

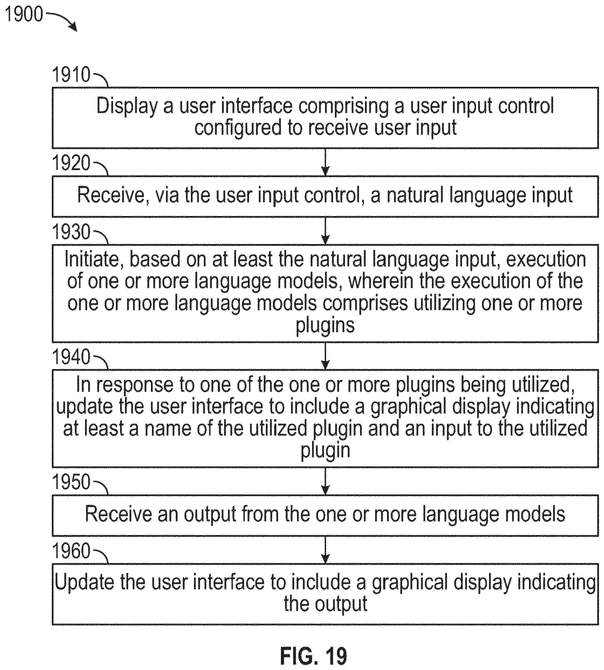

**Figure 19** is a flowchart of one embodiment of an example method that includes displaying indications of one or more utilized plugins, such as dynamically as the plugins are accessed. While described below as generally being performed by a "system," any one or all of the blocks may be performed by components of an orchestration system, as discussed herein, and/or any other suitable computing device or service, either alone or in combination with components of an orchestration system.

At block 1910, the system displays a user interface comprising a user input control configured to receive user input. At block 1920, the system receives, via the user input control, a natural language input. At block 1930, the system initiates, based on at least the natural language input, execution of one or more language models, wherein the execution of the one or more language models comprises utilizing one or more plugins. At block 1940, in response to one of the one or more plugins being utilized, the system updates the user interface to include a graphical display indicating at least a name of the utilized plugin and an input to the utilized plugin. At block 1950, the system receives an output from the one or more language models. At block 1960, the system updates the user interface to include a graphical display indicating the output.

### Example Split View

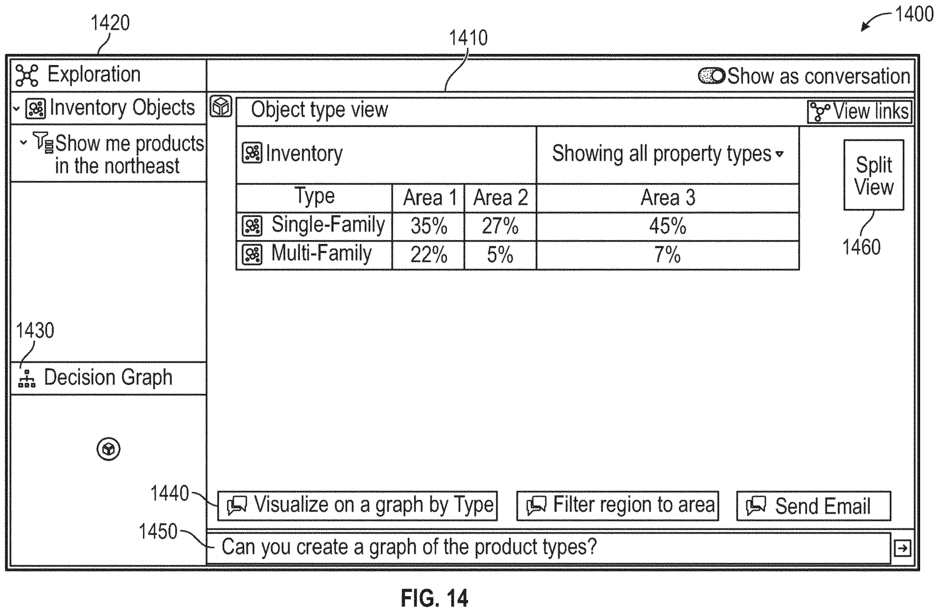

**Figure 14** illustrates an example user interface 1400 having an interaction pane 1410 configured to receive input from a user and provide output to the user. Similar to the user interface 400 in Figure 4, the interaction pane 1410 shows the initial results provided by a language model, such as may have been received from one or more service (e.g., a plugin) called by a service orchestrator. Additionally, the user interface 1400 includes an interactive user control 1460 labeled "Split View." In this example, the interactive user control 1460 is a button, but in various implementations, the interactive user control 1460 may be of another type (e.g., a checkbox or radio button).

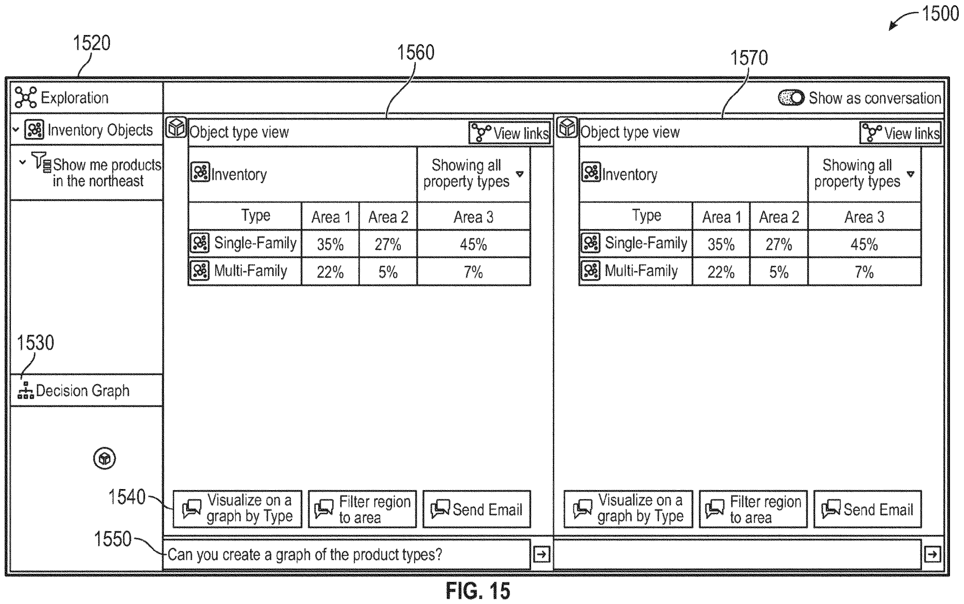

**Figure 15** illustrates an example user interface 1500 according to various implementations. The user interface 1500 may follow user interface 1400 in response to a user interacting with the interactive user control 1460. In response to the user selecting the split view control 1460, the user interface is updated to include side-by-side view of two interactions panes: a first interaction pane 1560 and a second interaction pane 1570. In various implementations, and in this example, immediately following user interaction with the interactive user control 1460, the first and second interaction panes 1560, 1570 may include the same user prompts and results from performance of one or more services, e.g., a copy of the user prompts and results in the interaction pane 1410. A user may interact with each of the interaction panes 1560, 1570 independently. For example, as shown in Figure 15, a user may interact with the first interaction pane 1560 by inputting a prompt in the input area 1550.

**Figure 16** illustrates an example user interface 1600 which shows updates to the user interface 1500 (Figure 15) responsive to submission of the user prompt "Can you create a graph of the product types" provides in user input area 1550 of user interface 1500. As shown, in relation to Figure 15, the first panel 1560 has been updated to display the example visualization, while the second panel 1570 has not changed. In this example, the exploration pane 1620 is updated from the exploration pane 1520 to include the most recent user prompt (e.g., "Can you create a graph of the product types"). Similarly, the decision graph 1630 is updated from the decision graph 1530 to indicate the requested graphing visualization.

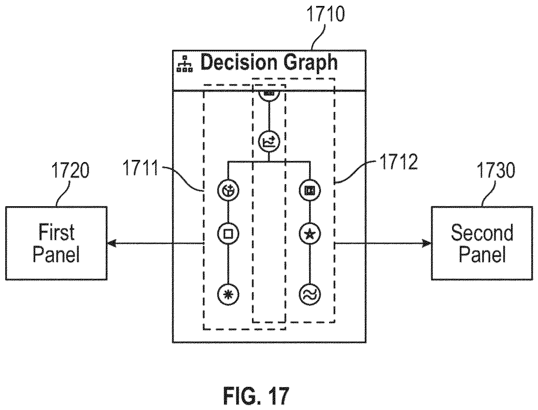

**Figure 17** is a diagram illustrating relationships between a decision graph 1710 and information that is provided in a first panel 1720 and second, split-view, panel 1730. As shown, a first subsection 1711 of the decision graph 1710 may relate or correspond to the first panel 1720 and a second subsection 1712 of the decision graph 1710 may relate or correspond to the second panel 1730. As shown, the first subsection 1711 and second subsection 1712 of the decision graph 1710 may overlap, indicating that the first panel 1720 and second panel 1730 may both include user prompts and responses from the language model that occurred prior to the user selecting the split view button, causing duplication of the navigation pane into a new split view pane. Thus, in this example, the top two nodes of the graph in Fig. 17 represent content that may be displayed in each of a first and second panel. After the split view is created, content in the first and second panels may be independently updated, as indicated by the left and right branches that extend downward in the graph in Fig. 17. Thus, in the example of Fig. 17, the first panel 1720 may relate or correspond to a first subsection 1711 of items in the graph 1730 (including a left branch of the decision graph 1730), while the second panel 1730 may relate or correspond to a second subsection 1712 of items in the graph (including a right branch of the decision graph 1730).

The graphical user interfaces may be configured to allow a user to return to a previous node in the decision graph 630 and start a new branch for the session (e.g., by inputting a new prompt at that point in the decision graph or tree). Any context used by the orchestration system (e.g., by the Orchestrator Selector 102, Service Orchestrators 120, data processing services 130 or other components illustrated in Figure 1) may be restricted to the current branch that the user is on in their session and may in some implementations not include context from unused branches.

In some embodiments, the orchestration system may provide display options (e.g., in the graphical user interface 400 described above), such as to provide an explanation of at least some of the processing that was done to service the user request. For example, the explanation can include a list and/or description of Service Orchestrators or services used to service the request, and/or an indication of API inputs that were used. The explanation may include an indication of which portions of the natural language prompt were mapped to which Service Orchestrators or services. The explanation may be included in the exploration pane 621, such as in a pop-up window that appears when the user hovers over one of the items in the exploration pane 621.

In one example implementation, a user interface 400 may be used to initiate a session by inputting a prompt or selecting an object type from a list (e.g., a list of counties in a given state). For example, the user may type "create a graph," and the orchestration system may service this request for the selected counties (by leveraging the context) and create and present a graph in a visualization application by leveraging a visualization Service Orchestrator as described herein. The user may type "run an analysis model on the list of counties", and the orchestration system may implement an ontology search Service Orchestrator to search for models linked to the selected counties in the ontology. The orchestration system may return a linked model such as a gross domestic product (GDP) estimator that shows projected county GDP. A user can inspect the model via the graphical user interface (e.g., can click to open the model and see who built it, various statistics, how it was trained, and other relevant information) to satisfy themselves that the model can be used responsibly. The user can instruct the orchestration system to run the model, thus providing human-in-the-loop responsible usage of the model. The orchestration system can implement a model Service Orchestrator to run the model, and can provide the output e.g., a projected GDP for each selected county for the next ten years. The user can type "show this on a map," and the orchestration system can implement the visualization Service Orchestrator to display this on the map. The visualization Service Orchestrator may detect, as part of the context, that the projected GDPs have time-dependent properties, and may accordingly implement the appropriate services to include an interactive object (e.g., a slider) on the map that allows a user to select for which year the GDPs are being shown. The user may select a one or more counties on the map, which can thus include those counties in the context, and type "help me draft an email to my boss about this". The orchestration system may open a graphical user interface for drafting an email. The user may type "create a short body" in the graphical user interface, and the orchestration system may implement a session Service Orchestrator to generate a natural language summary of the current session or conversation.

A note on responsible use of AI: AI is a powerful tool, and ethical restraints should be built into that tool where possible. The present disclosure provides for systems and methods that respect ethical restraints. For example, the systems and methods for orchestrating data processing services may use a set of resources that are allow-listed, or may refrain from using a set of resources that are deny-listed. These resources may be anything used by the systems and methods described herein, such as underlying data sets (or portions thereof) or actions included in a list of available action types. In some embodiments, access controls may be applied as appropriate to resources (e.g., as role-based access controls (RBAC) or purpose-based access controls (PBAC)). In some embodiments, services that involve use of AI models are not implemented until a user has had a chance to inspect details about the AI model (e.g., who created it, what it was trained on, it's performance record). In some embodiments, certain actions are not implemented until further confirmation is provided by a user to implement the action, thus assuring a human-in-the-loop. Thus, irresponsible use of these tools can be curtailed.

Furthermore, the recording of decisions (e.g., in a decisions tree) in a given session provides for auditing functionality that can be used to investigate any set of decisions that resulted in an undesirable result, for analysis on how to prevent such results in the future. By leveraging this auditing functionality, organizations or individuals can improve processes and establish guardrails to curtain unethical acts or results.

While certain embodiments and implementations are discussed herein with reference to use of a language model, large language model, and/or Artificial Intelligence, those embodiments and implementations may be performed by any other language model, large language model, artificial intelligence, machine learning, neural network, and/or other algorithmic processes.

### Example Methods

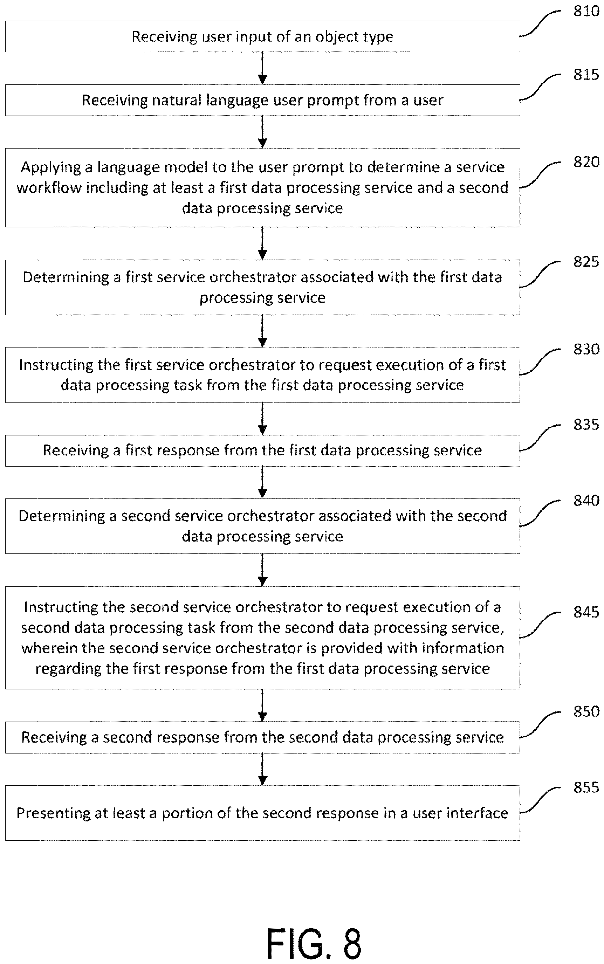

Examples of certain implementations will be described below with reference to several flowcharts. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect. The below example implementations are not intended to identify key features or essential features of any subject matter described herein. Any of the example features discussed below may be combined with any one or more other features discussed in other flowcharts or elsewhere in this specification. The processes and functions indicated in the flowcharts may be performed by any components of an Orchestration System, such as by an Orchestrator Selector, Service Orchestrator(s), Data Processing Service(s), User computing system, and/or any other suitable computing device. Depending on the embodiment, the methods of Figure 8-12 may include fewer or additional blocks and the blocks may be performed in an order that is different than illustrated.

**Figure 8** is a flowchart of one embodiment of an example method that includes selecting a services workflow and initiating execution of services therein. While described below as generally being performed by a "system," any one or all of the blocks may be performed by components of an orchestration system, as discussed herein, and/or any other suitable computing device or service, either alone or in combination with components of an orchestration system.

At block 810, a system receives user input of an object type. At block 815, the system receives a natural language user prompt from a user. At block 820, the system, e.g., the selection module 106 (Figure 2B), applies a language model to the user prompt to determine a service workflow including at least a first data processing service and a second data processing service. At block 825, the system determines a first service orchestrator associated with the first data processing service. At block 830, the system, e.g., the management module 108 (Figure 1), instructs the first service orchestrator to request execution of a first data processing task from the first data processing service. At block 835, the system receives a first response from the first data processing service. At block 840, the system determines a second service orchestrator associated with the second data processing service. At block 845, the system, e.g., the management module 108 (Figure 1), instructs the second service orchestrator to request execution of a second data processing task from the second data processing service, wherein the second service orchestrator may be provided with information regarding the first response from the first data processing service. At block 850, the system receives a second response from the second data processing service. At block 855, the system presents at least a portion of the second response in a user interface, such as in the example user interfaces of examples 4-5.

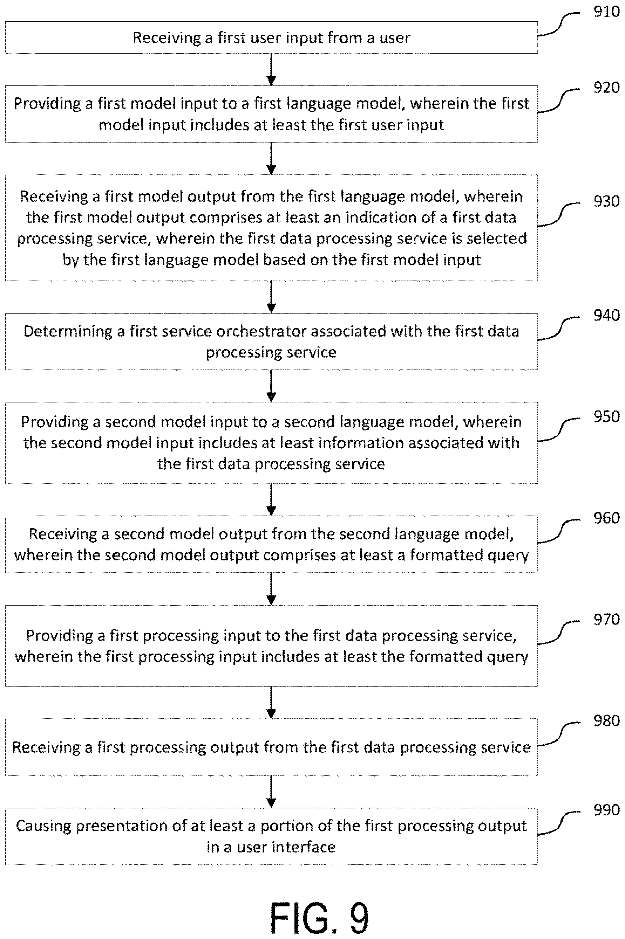

**Figure 9** is a flowchart of one embodiment of an example method that includes use of language models to generate a formatted query for a particular data processing service. While described below as generally being performed by a "system," any one or all of the blocks may be performed by components of an orchestration system, as discussed herein, and/or any other suitable computing device or service, either alone or in combination with components of an orchestration system.

At block 910, a system receives a first user input from a user. At block 920, the system, e.g., the selection module 106 of Figure 1, provides a first model input to a first language model, e.g., LLM 110 of Figure 1, wherein the first model input includes at least the first user input. At block 930, the system receives a first model output from the first language model, wherein the first model output comprises at least an indication of a first data processing service, wherein the first data processing service is selected by the first language model based on the first model input. At block 940, the system determines a first service orchestrator associated with the first data processing service. At block 950, the system provides a second model input to a second language model that is configured to generate a properly formatted query to a particular data processing service. In this example, the second model input includes at least information associated with the first data processing service, such as acceptable format and parameters of queries to the first data processing service. At block 960, the system receives a second model output from the second language model, wherein the second model output comprises at least a formatted query. At block 970, the system provides a first processing input to the first data processing service, wherein the first processing input includes at least the formatted query. At block 980, the system receives a first processing output from the first data processing service. At block 990, the system causes presentation of at least a portion of the first processing output in a user interface, such as in the example user interfaces of examples 4-5.

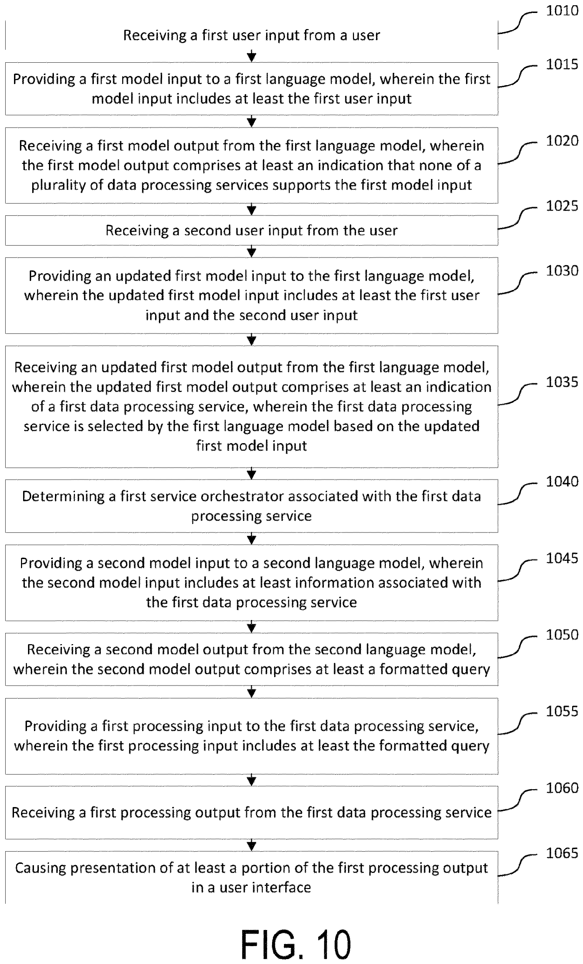

**Figure 10** is a flowchart of one embodiment of an example method that includes identification of unsupported output/results from an orchestrator selection. While described below as generally being performed by a "system," any one or all of the blocks may be performed by components of an orchestration system, as discussed herein, and/or any other suitable computing device or service, either alone or in combination with components of an orchestration system.

At block 1010, the system receives a first user input from a user. At block 1015, the system, e.g., the selection module 106 of Figure 1, provides a first model input to a first language model, e.g., LLM 110 of Figure 1, wherein the first model input includes at least the first user input. At block 1020, the system receives a first model output from the first language model, wherein the first model output comprises at least an indication that none of a plurality of data processing services supports the first model input. This output from the LLM 110 may indicate that there isn't a suitable data processing service to perform a task indicated by the first user input. At block 1025, the system receives a second user input from the user, such as an updated or revised version of the first user input. For example, the user may be notified that the first user input could not be completed and ask the user to revise or update the user input. At block 1030, the system, e.g., the selection module 106, provides an updated first model input to the first language model, wherein the updated first model input includes the second user input and may include some or all of the first user input and/or other relevant context. At block 1035, the system receives an updated first model output from the first language model, wherein the updated first model output comprises at least an indication of a first data processing service, wherein the first data processing service is determined by the first language model based on the updated first model input (in accordance with training data, for example). At block 1040, the system determines a first service orchestrator associated with the first data processing service. At block 1045, the system provides a second model input to a second language model configured to provide a properly formatted query (or other input) to an identified data processing service. For example, the second model input may include information associated with the first data processing service, such as format, parameters, options, etc. that are acceptable in a query to the first data processing service. At block 1050, the system receives a second model output from the second language model, wherein the second model output comprises at least a query formatted specifically for the first data processing service. At block 1055, the system provides a first processing input, which may be only the formatted query or may include additional information, to the first data processing service. At block 1060, the system receives a first processing output from the first data processing service. At block 1065, the system causes presentation of at least a portion of the first processing output in a user interface, such as in the example user interfaces of examples 4-5.

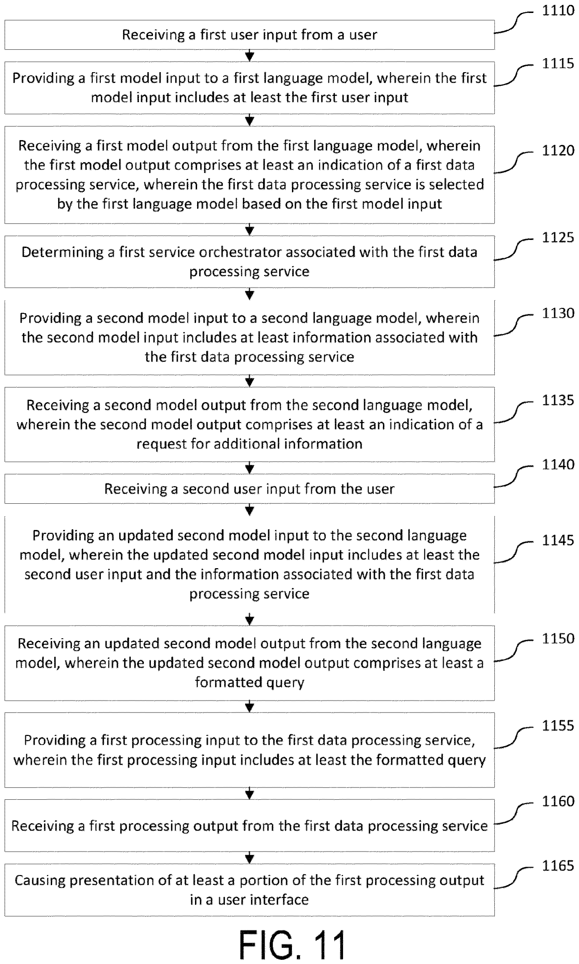

**Figure 11** is a flowchart of one embodiment of an example method that includes requesting clarifying information from a user, such as in response to an initial user prompt. While described below as generally being performed by a "system," any one or all of the blocks may be performed by components of an orchestration system, as discussed herein, and/or any other suitable computing device or service, either alone or in combination with components of an orchestration system.

At block 1110, the system receives a first user input from a user. At block 1115, the system, e.g., the selection module 106 of Figure 1, provides a first model input to a first language model, wherein the first model input includes at least the first user input. At block 1120, the system receives a first model output from the first language model, wherein the first model output comprises at least an indication of a first data processing service, wherein the first data processing service is selected by the first language model based on the first model input. As noted above, the first language model may select a data processing service base on training data, such as training data that is included in the first model input (e.g., which includes the first user input and training data) and/or is otherwise accessible to the first language model. At block 1125, the system determines a first service orchestrator associated with the first data processing service. At block 1130, the system provides a second model input to a second language model, wherein the second model input includes at least information associated with the first data processing service. At block 1135, the system receives a second model output from the second language model, wherein the second model output comprises at least an indication of a request for additional information. At block 1140, the system receives a second user input from the user, such as in response to a message to the user that additional information is needed. At block 1145, the system provides an updated second model input to the second language model, wherein the updated second model input includes at least the second user input and the information associated with the first data processing service. At block 1150, the system receives an updated second model output from the second language model, wherein the updated second model output comprises at least a formatted query. At block 1155, the system provides a first processing input to the first data processing service, wherein the first processing input includes at least the formatted query. At block 1160, the system receives a first processing output from the first data processing service. At block 1165, the system causes presentation of at least a portion of the first processing output in a user interface.

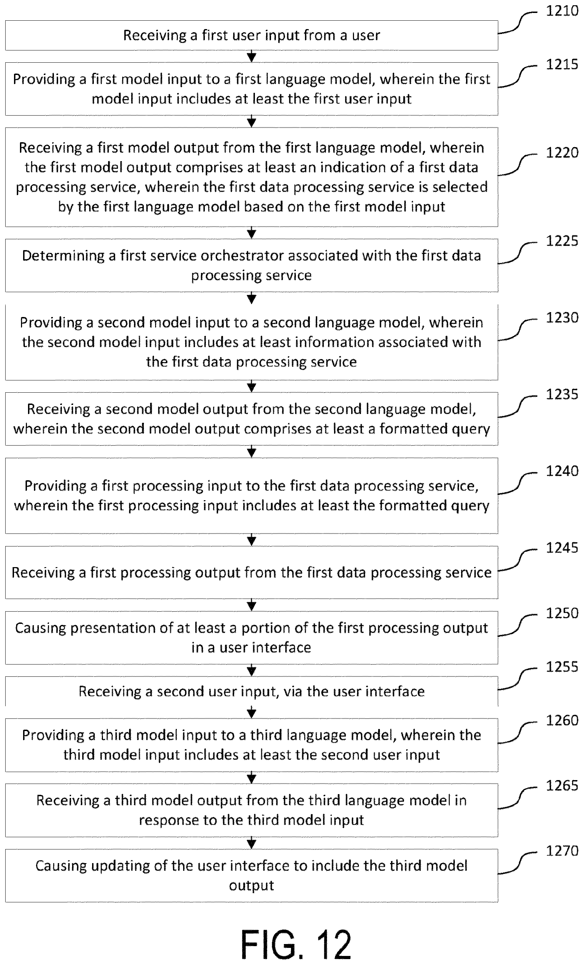

**Figure 12** is a flowchart of one embodiment of an example method that includes generating content, such as for an email. While described below as generally being performed by a "system," any one or all of the blocks may be performed by components of an orchestration system, as discussed herein, and/or any other suitable computing device or service, either alone or in combination with components of an orchestration system.

At block 1210, the system receives a first user input from a user. At block 1215, the system provides a first model input to a first language model, wherein the first model input includes at least the first user input. At block 1220, the system receives a first model output from the first language model, wherein the first model output comprises at least an indication of a first data processing service, wherein the first data processing service is selected by the first language model based on the first model input. At block 1225, the system determines a first service orchestrator associated with the first data processing service. At block 1230, the system provides a second model input to a second language model, wherein the second model input includes at least information associated with the first data processing service. At block 1235, the system receives a second model output from the second language model, wherein the second model output comprises at least a formatted query. At block 1240, the system provides a first processing input to the first data processing service, wherein the first processing input includes at least the formatted query. At block 1245, the system receives a first processing output from the first data processing service. At block 1250, the system causes presentation of at least a portion of the first processing output in a user interface. At block 1255, the system receives a second user input, via the user interface. At block 1260, the system provides a third model input to a third language model, wherein the third model input includes at least the second user input. At block 1265, the system receives a third model output from the third language model in response to the third model input. At block 1270, the system causes updating of the user interface to include the third model output.

### Example System Configurations

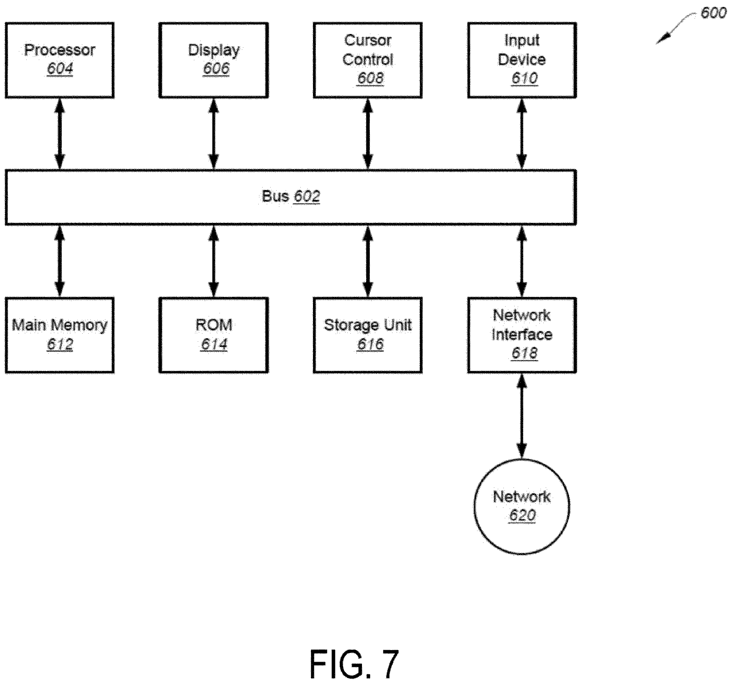

**Figure 7** is a simplified diagram showing an example computing system 600 upon which various functions and processes discussed herein may be performed. For example, each of the devices, such as the Orchestrator Selector 102, Service Orchestrators 120, Data Processing Services 130, User 150, and/or other devices discussed herein may include some or all of the components illustrated with reference to computer system 600.

The system 600 is merely an example. One of ordinary skill in the art would recognize many variations, alternatives, and modifications. The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In certain embodiments, some or all processes (e.g., steps) of the methods discussed herein are performed by the computing system 600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For examples, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

### Additional implementations

Examples of the implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A method performed by an orchestration system, the method comprising: receiving user input of an object type; receiving natural language user prompt from a user; applying a language model to the user prompt to determine a service workflow including at least a first data processing service and a second data processing service; determining a first service orchestrator associated with the first data processing service; instructing the first service orchestrator to request execution of a first data processing task from the first data processing service; receiving a first response from the first data processing service; determining a second service orchestrator associated with the second data processing service; instructing the second service orchestrator to request execution of a second data processing task from the second data processing service, wherein the second service orchestrator is provided with information regarding the first response from the first data processing service; receiving a second response from the second data processing service; and presenting at least a portion of the second response in a user interface.

Clause 2. The method of clause 1, further comprising: determining that the first data processing service was selected with below a threshold level of confidence; in response to said determining that the first data processing service was selected with below the threshold level of confidence, presenting a follow-up question to the user requesting additional information; and receiving the additional information from the user, wherein the first data processing service is selected based on both the natural language user prompt and the additional information.

Clause 3. The method of clause 2, wherein the additional information includes information usable for determining selection of the first data processing service with above the threshold level of confidence.

Clause 4. A computer-implemented method comprising: by one or more processors executing program instructions: receiving a first user input from a user; providing a first model input to a first language model, wherein the first model input includes at least the first user input; receiving a first model output from the first language model, wherein the first model output comprises at least an indication of a first data processing service, wherein the first data processing service is selected by the first language model based on the first model input; determining a first service orchestrator associated with the first data processing service; providing a second model input to a second language model, wherein the second model input includes at least information associated with the first data processing service; receiving a second model output from the second language model, wherein the second model output comprises at least a formatted query; providing a first processing input to the first data processing service, wherein the first processing input includes at least the formatted query; receiving a first processing output from the first data processing service; and causing presentation of at least a portion of the first processing output in a user interface.

Clause 5. The computer-implemented method of clause 4, wherein the first user input comprises a natural language prompt.

Clause 6. The computer-implemented method of clause 5, wherein the first user input comprises a selection and/or identification of a data object type (also referred to as an object type).

Clause 7. The computer-implemented method of clause 4, wherein the first model input further includes a listing of one or more data processing services.

Clause 8. The computer-implemented method of clause 7, wherein the first model input further includes information regarding capabilities and/or functionality of each of the one or more data processing services.

Clause 9. The computer-implemented method of clause 7 further comprising: by the one or more processors executing program instructions: determining the listing of the one or more data processing services.

Clause 10. The computer-implemented method of clause 9, wherein the listing of the one or more data processing services is determined based at least in part on at least one of: a data object type associated with the first user input, a data object type derived from the first user input, a data object type selected by the user, the first user input, a context associated with the first user input, semantics and/or embeddings associated with the first user input and/or a context associated with the first user input, or a semantic search of the first user input and/or a context associated with the first user input.

Clause 11. The computer-implemented method of clause 7, wherein the first model input further includes a context associated with the first user input.

Clause 12. The computer-implemented method of clause 11, wherein the context associated with the first user input does not include actual data to be processed, but may include a schema or other metadata associated with the actual data to be processed.

Clause 13. The computer-implemented method of clause 4, wherein the first language model is configured, at least in part by the first model input, to select the first data processing service.

Clause 14. The computer-implemented method of clause 4, wherein providing the first model input to the first language model, receiving the first model output from the first language model, and determining the first service orchestrator, are performed by one or more orchestrator selectors, selection modules, and/or the like or any combination thereof.

Clause 15. The computer-implemented method of clause 4, wherein the information associated with the first data processing service includes at least one of: information regarding functionality of the first data processing service, information regarding a query format associated with the first data processing service, or examples of formatted queries and/or data formats associated with the first data processing service.

Clause 16. The computer-implemented method of clause 4, wherein the second model input further includes the first user input.

Clause 17. The computer-implemented method of clause 4, wherein the second model input further includes a context associated with the first user input.

Clause 18. The computer-implemented method of clause 4, wherein the second model input further includes information associated with the user.

Clause 19. The computer-implemented method of clause 18, wherein the information associated with the user includes permissions information.

Clause 20. The computer-implemented method of clause 4, wherein the second model input further includes information associated with the first service orchestrator.

Clause 21. The computer-implemented method of clause 20, wherein the information associated with the first service orchestrator includes logic for translating to and/or generating queries compatible with and/or formatted for the first data processing service.

Clause 22. The computer-implemented method of clause 4 further comprising: by the one or more processors executing program instructions: confirming a validity of the formatted query.

Clause 23. The computer-implemented method of clause 4, wherein the first processing input further includes actual data to be processed.

Clause 24. The computer-implemented method of clause 4, wherein the first processing input does not include actual data to be processed, but may include a schema or other metadata associated with the actual data to be processed.

Clause 25. The computer-implemented method of clause 4, wherein the second language model is configured, at least in part by the second model input, to generate the formatted query.

Clause 26. The computer-implemented method of clause 4, wherein providing the second model input to the second language model, receiving the second model output from the second language model, and providing the first processing input to the first data processing service, are performed by one or more service orchestrators and/or the like or any combination thereof.

Clause 27. The computer-implemented method of clause 4, wherein receiving the first processing output from the first data processing service, and causing presentation of at least the portion of the first processing output in the user interface, are performed by one or more service orchestrators, orchestrator selectors, management modules, user interface modules, and/or the like or any combination thereof.

Clause 28. The computer-implemented method of clause 4, wherein the first language model and the second language model are the same.

Clause 29. The computer-implemented method of clause 4, wherein the first language model and the second language model are different.

Clause 30. The computer-implemented method of clause 4, wherein at least one of the first language model or the second language model is selected by the user.

Clause 31. The computer-implemented method of clause 4 further comprising: by the one or more processors executing program instructions: receiving a selection, by the user, of at least one of the first language model or the second language model.

Clause 32. The computer-implemented method of clause 4 further comprising: by the one or more processors executing program instructions: automatically selecting at least one of the first language model or the second language model.

Clause 33. The computer-implemented method of clause 4, wherein at least one of the first language model or the second language model is trained, at least in part, on at least one of: information associated with one or more service orchestrators, or information associated with one or more data processing services.

Clause 34. The computer-implemented method of clause 4, wherein at least one of the first language model or the second language model is an external language model accessible via an application programming interface ("API").

Clause 35. The computer-implemented method of clause 4, wherein at least one of the first language model or the second language model is an internal and/or proprietary language model.

Clause 36. The computer-implemented method of clause 4, wherein the first data processing service is selected from a plurality of data processing services.

Clause 37. The computer-implemented method of clause 4, wherein the first service orchestrator is one of a plurality of service orchestrators.

Clause 38. The computer-implemented method of clause 4, wherein the first service orchestrator is associated with a plurality of data processing services.

Clause 39. The computer-implemented method of clause 4 further comprising: by the one or more processors executing program instructions: providing a second processing input to a second data processing service, wherein the second processing input includes at least the first processing; receiving a second processing output from the second data processing service; and causing presentation of at least a portion of the second processing output in a user interface.

Clause 40. The computer-implemented method of clause 39 further comprising: by the one or more processors executing program instructions: determining a second service orchestrator associated with the second data processing service.

Clause 41. The computer-implemented method of clause 39, wherein the first model output further comprises at least an indication of the second data processing service.

Clause 42. The computer-implemented method of clause 39, wherein the second data processing service is selected at least in part based on the first processing output.

Clause 43. The computer-implemented method of clause 39 further comprising: by the one or more processors executing program instructions: generating a second formatted query based at least in part on the first processing output, wherein the second processing input further includes at least the second formatted.

Clause 44. The computer-implemented method of clause 4 further comprising: by the one or more processors executing program instructions: providing a third model input to a third language model, wherein the third model input includes at least information associated with a second data processing service and the first processing output; receiving a third model output from the third language model, wherein the third model output comprises at least a second formatted query; providing a second processing input to the second data processing service, wherein the second processing input includes at least the second formatted query; receiving a second processing output from the second data processing service; and causing presentation of at least a portion of the second processing output in a user interface.

Clause 45. The computer-implemented method of clause 44 further comprising: by the one or more processors executing program instructions: determining a second service orchestrator associated with the second data processing service.

Clause 46. The computer-implemented method of clause 44, wherein the first model output further comprises at least an indication of the second data processing service.

Clause 47. The computer-implemented method of clause 44, wherein the second data processing service is selected at least in part based on the first processing output.

Clause 48. The computer-implemented method of clause 44, wherein the second processing input further includes at least the first processing output.

Clause 49. A computer-implemented method comprising: by one or more processors executing program instructions: receiving a first user input from a user; providing a first model input to a first language model, wherein the first model input includes at least the first user input; receiving a first model output from the first language model, wherein the first model output comprises at least an indication that none of a plurality of data processing services supports the first model input; receiving a second user input from the user; providing an updated first model input to the first language model, wherein the updated first model input includes at least the first user input and the second user input; receiving an updated first model output from the first language model, wherein the updated first model output comprises at least an indication of a first data processing service, wherein the first data processing service is selected by the first language model based on the updated first model input; determining a first service orchestrator associated with the first data processing service; providing a second model input to a second language model, wherein the second model input includes at least information associated with the first data processing service; receiving a second model output from the second language model, wherein the second model output comprises at least a formatted query; providing a first processing input to the first data processing service, wherein the first processing input includes at least the formatted query; receiving a first processing output from the first data processing service; and causing presentation of at least a portion of the first processing output in a user interface.

Clause 50. The computer-implemented method of clause 49, wherein the indication that none of the plurality of data processing services supports the first model input is provided to the user via the user interface.

Clause 51. The computer-implemented method of clause 49, wherein the indication that none of the plurality of data processing services supports the first model input is output by the first language model in response to the first language model determining that none of the plurality of data processing services matches the first model input.

Clause 52. The computer-implemented method of clause 49, wherein the indication that none of the plurality of data processing services supports the first model input is output by the first language model in response to the first language model determining that none of the plurality of data processing services matches the first model input with a threshold level of confidence.

Clause 53. A computer-implemented method comprising: by one or more processors executing program instructions: receiving a first user input from a user; providing a first model input to a first language model, wherein the first model input includes at least the first user input; receiving a first model output from the first language model, wherein the first model output comprises at least an indication of a first data processing service, wherein the first data processing service is selected by the first language model based on the first model input; determining a first service orchestrator associated with the first data processing service; providing a second model input to a second language model, wherein the second model input includes at least information associated with the first data processing service; receiving a second model output from the second language model, wherein the second model output comprises at least an indication of a request for additional information; receiving a second user input from the user; providing an updated second model input to the second language model, wherein the updated second model input includes at least the second user input and the information associated with the first data processing service; receiving an updated second model output from the second language model, wherein the updated second model output comprises at least a formatted query; providing a first processing input to the first data processing service, wherein the first processing input includes at least the formatted query; receiving a first processing output from the first data processing service; and causing presentation of at least a portion of the first processing output in a user interface.

Clause 54. The computer-implemented method of clause 53, wherein the request for additional information is provided to the user via the user interface.

Clause 55. The computer-implemented method of clause 53, wherein the request for additional information comprises a clarifying question to be presented to the user.

Clause 56. The computer-implemented method of clause 55, wherein second user input comprises a natural language input.

Clause 57. The computer-implemented method of clause 53, wherein the request for additional information comprises a request to select a model of a plurality of models usable by or associated with the first data processing service.

Clause 58. The computer-implemented method of clause 53, wherein the request for additional information comprises a request to fill in one or more fields of a form or email template based at least in part on information provided by the first data processing service.

Clause 59. The computer-implemented method of clause 58, wherein second user input comprises information to fill in at least one of the one or more fields.

Clause 60. A computer-implemented method comprising: by one or more processors executing program instructions: receiving a first user input from a user; providing a first model input to a first language model, wherein the first model input includes at least the first user input; receiving a first model output from the first language model, wherein the first model output comprises at least an indication of a first data processing service, wherein the first data processing service is selected by the first language model based on the first model input; determining a first service orchestrator associated with the first data processing service; providing a second model input to a second language model, wherein the second model input includes at least information associated with the first data processing service; receiving a second model output from the second language model, wherein the second model output comprises at least a formatted query; providing a first processing input to the first data processing service, wherein the first processing input includes at least the formatted query; receiving a first processing output from the first data processing service; causing presentation of at least a portion of the first processing output in a user interface; receiving a second user input, via the user interface; providing a third model input to a third language model, wherein the third model input includes at least the second user input; receiving a third model output from the third language model in response to the third model input; and causing updating of the user interface to include the third model output.

Clause 61. The computer-implemented method of clause 60, wherein the presentation of the at least a portion of the first processing output includes one or more fields of a form or email template based at least in part on information provided by the first data processing service.

Clause 62. The computer-implemented method of clause 61, wherein second user input comprises information and/or a natural language prompt usable to query the third language model to fill in at least one of the one or more fields.

Clause 63. The computer-implemented method of clause 60, wherein the third model input further includes the information associated with at least one of: the first data processing service or the first service orchestrator.

Clause 64. The computer-implemented method of clause 63, wherein the information associated with the first data processing service or the first service orchestrator includes at least one of: information regarding functionality of the first data processing service or the first service orchestrator, information regarding a query format associated with the first data processing service or the first service orchestrator, or examples of formatted queries and/or data formats associated with the first data processing service or the first service orchestrator.

Clause 65. The computer-implemented method of clause 60, wherein the third model input further includes the first user input and/or the second user input.

Clause 66. The computer-implemented method of clause 60, wherein the third model input further includes a context associated with the first user input and/or the second user input.

Clause 67. The computer-implemented method of clause 60, wherein the third model input further includes information associated with the user.

Clause 68. The computer-implemented method of clause 67, wherein the information associated with the user includes permissions information.

Clause 69. The computer-implemented method of clause 60, wherein the third model input further includes information associated with the first service orchestrator.

Clause 70. The computer-implemented method of clause 60, wherein the third language model is configured, at least in part by the third model input, to generate information usable, based on context, for filling in form fields.

Clause 71. The computer-implemented method of clause 70, wherein the context includes at least one of: a type of a form field, information associated with the first user input, or information associated with the second model output.

Clause 72. The computer-implemented method of clause 60, wherein receiving the second user input, providing the third model input, receiving the third model output, and, causing updating of the user interface, are performed by one or more service orchestrators, orchestrator selectors, selection modules, management modules, user interface modules, and/or the like or any combination thereof.

Clause 73. The computer-implemented method of clause 60, wherein the first language model, the second language model, and the third language model are the same.

Clause 74. The computer-implemented method of clause 60, wherein at least one of the first language model, the second language model, and the third language model is different.

Clause 75. The computer-implemented method of clause 60, wherein the first language model, the second language model, and the third language model are different.

Clause 76. The computer-implemented method of clause 60, wherein at least one of the first language model, the second language model, or the third language model is selected by the user.

Clause 77. The computer-implemented method of clause 60 further comprising: by the one or more processors executing program instructions: receiving a selection, by the user, of at least one of the first language model, the second language model, or the third language model.

Clause 78. The computer-implemented method of clause 60 further comprising: by the one or more processors executing program instructions: automatically selecting at least one of the first language model, the second language model, or the third language model.

Clause 79. The computer-implemented method of clause 60, wherein at least one of the first language model, the second language model, or the third language model is trained, at least in part, on at least one of: information associated with one or more service orchestrators, or information associated with one or more data processing services.

Clause 80. The computer-implemented method of clause 60, wherein at least one of the first language model, the second language model, or the third language model is an external language model accessible via an application programming interface ("API").

Clause 81. The computer-implemented method of clause 60, wherein at least one of the first language model, the second language model, or the third language model is an internal and/or proprietary language model.

Clause 82. A computer-implemented method, performed by an artificial intelligence computing system having one or more hardware computer processors and one or more non-transitory computer readable storage device storing software instructions executable by the computing system to perform the computer-implemented method comprising: displaying a user interface comprising a user input control configured to receive user input; receiving, via the user input control, a natural language input; generating, based on at least the natural language input, a first model input usable to determine a plurality of data processing services; providing the first model input to a language model, wherein the language model is configured, based at least on the first model input, to execute the plurality of data processing services and, as individual data processing services are executed, notify the computing system; in response to receiving notifications of execution of respective data processing services, dynamically updating the user interface to include identifiers of status of data processing services; receiving an output from the language model; and updating the user interface to include at least a portion of the output.

Clause 83. The computer-implemented method of clause 82, wherein the dynamic update of the user interface to include identifiers of the utilized data processing services indicates handoffs of data between data processing services.

Clause 84. The computer-implemented method of clause 82, wherein at least a portion of a first service output from a first data processing is provided to a second data processing service.

Clause 85. The computer-implemented method of clause 82, wherein the user interface is further updated to indicate inputs provided to the data processing services.

Clause 86. The computer-implemented method of clause 82, wherein the user interface is further updated to indicate outputs from the data processing services.

Clause 87. The computer-implemented method of clause 82, wherein the first model input includes a listing of the plurality of data services.

Clause 88. The computer-implemented method of clause 82, wherein the language model is configured to select the plurality of data processing services to execute.

Clause 89. The computer-implemented method of clause 88, wherein the first model input includes a listing of the plurality of data services and at least one additional data service that is not selected by the language model for execution.

Clause 90. The computer-implemented method of clause 88, wherein the plurality of data processing services to execute are selected based on one or more rules included in the first model input.

Clause 91. The computer-implemented method of clause 82, wherein the identifier of the utilized data processing service includes a name of the data processing service.

Clause 92. The computer-implemented method of clause 82, wherein the user interface includes a separate monitoring panel where the identifiers of the utilized data processing services are indicated.

Clause 93. The computer-implemented method of clause 92, wherein the indicators of utilized data processing services indicated in a monitoring panel are dynamically updated as notifications from the language model are received.

Clause 94. The computer-implemented method of clause 93, wherein at least two data processing services are indicated in a monitoring panel before the output from the language model is received.

Clause 95. The computer-implemented method of clause 82, wherein the data processing services are plugins.

Clause 96. The computer-implemented method of clause 82, wherein the plurality of data processing services is determined based at least in part on at least one of: a data object type associated with the user input, a data object type derived from the user input, a data object type selected by the user, the user input, a context associated with the user input, semantics and/or embeddings associated with the user input and/or a context associated with the user input, or a semantic search of the user input and/or a context associated with the user input.

Clause 97. The computer-implemented method of clause 82, wherein the first model input further includes a context associated with the first user input.

Clause 98. A computer-implemented method, performed by an artificial intelligence computing system having one or more hardware computer processors and one or more non-transitory computer readable storage device storing software instructions executable by the computing system to perform the computer-implemented method comprising: displaying a user interface comprising a first panel configured to receiving inputs from a user and provide outputs from a language model; receiving, via the first panel, a first natural language input; initiating, based on at least the first natural language input, execution of the language model; updating the first panel based on a first output from the language model; and in response to receiving a split view input from the user, updating the user interface to concurrently display the first panel and a second panel, wherein the second panel includes at least the first output from the language model, and wherein the first and second panels are configured to receive separate user inputs and provide separate outputs from the language model.

Clause 99. The computer-implemented method of clause 98, wherein each of the first and second panels are associated with a context associated with the first natural language input.

Clause 100. The computer-implemented method of clause 98, wherein the second panel includes all of the inputs and outputs displayed in the first panel when the user interface is initially instructed to create the split view.

Clause 101. The computer-implemented method of clause 98, further comprising: receiving, via the second panel, a second natural language input; initiating, based on at least the second natural language input, execution of the language model; and updating the second panel based on a second output from the language model, without updating the first panel based on the second output.

Clause 102. The computer-implemented method of clause 101 wherein said initiating execution of the language model is further based on the context associated with the first natural language input.

Clause 103. The computer-implemented method of clause 101, further comprising: receiving, via the first panel, a third natural language input; initiating, based on at least the third natural language input, execution of the language model; and updating the first panel based on a third output from the language model, without updating the second panel based on the third output.

Clause 104. The computer-implemented method of clause 98, wherein the outputs displayed in the first panel and duplicated in the second panel when the user interface is initially instructed to create the split view are pinned to second panel so that adjustments to visibility of content, including scrolling the outputs partially or fulling out of view in the first panel, does not affect display of the outputs in the second panel.

Clause 105. The computer-implemented method of clause 104, wherein the outputs that are pinned to the second panel include a visualization, such as a chart, graph, map, and/or graphical indicator.

Clause 106. The computer-implemented method of clause 98, wherein the first panel is a vertical scrolling panel on a left side of the user interface and the second panel is a vertical scrolling panel on a right side of the user interface.

Clause 107. A system comprising: a computer readable storage medium having program instructions embodied therewith; and one or more processors configured to execute the program instructions to cause the system to perform the computer implemented method of any of Clauses 1-106.

Clause 83. A computer program product comprising a computer readable storage medium having program instructions embodied therewith, the program instructions executable by one or more processors to cause the one or more processors to perform the computer implemented method of any of Clauses 1-106.

### Additional Implementation Details and Embodiments

Various embodiments of the present disclosure may be a system, a method, and/or a computer program product at any possible technical detail level of integration. The computer program product may include a computer readable storage medium (or mediums) having computer readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer readable storage medium (or mediums).

Some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client deviceserver relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments.

## Claims

1. A method performed by an orchestration system, the method comprising:
receiving user input of an object type;
receiving natural language user prompt from a user;
applying a language model to the user prompt to determine a service workflow including at least a first data processing service and a second data processing service;
determining a first service orchestrator associated with the first data processing service;
instructing the first service orchestrator to request execution of a first data processing task from the first data processing service; receiving a first response from the first data processing service;
determining a second service orchestrator associated with the second data processing service;
instructing the second service orchestrator to request execution of a second data processing task from the second data processing service, wherein the second service orchestrator is provided with information regarding the first response from the first data processing service;
receiving a second response from the second data processing service; and
presenting at least a portion of the second response in a user interface.

2. The method of claim 1, further comprising:
determining that the first data processing service was selected with below a threshold level of confidence;
in response to said determining that the first data processing service was selected with below the threshold level of confidence, presenting a follow-up question to the user requesting additional information; and
receiving the additional information from the user, wherein the first data processing service is selected based on both the natural language user prompt and the additional information.

3. The method of claim 2, wherein the additional information includes information usable for determining selection of the first data processing service with above the threshold level of confidence.

4. A computer-implemented method comprising:
by one or more processors executing program instructions:
receiving a first user input from a user;
providing a first model input to a first language model, wherein the first model input includes at least the first user input;
receiving a first model output from the first language model, wherein the first model output comprises at least an indication of a first data processing service, wherein the first data processing service is selected by the first language model based on the first model input;
determining a first service orchestrator associated with the first data processing service;
providing a second model input to a second language model, wherein the second model input includes at least information associated with the first data processing service;
receiving a second model output from the second language model, wherein the second model output comprises at least a formatted query;
providing a first processing input to the first data processing service, wherein the first processing input includes at least the formatted query;
receiving a first processing output from the first data processing service; and
causing presentation of at least a portion of the first processing output in a user interface.

5. The computer-implemented method of claim 4, wherein the first user input comprises a natural language prompt.

6. The computer-implemented method of claim 5, wherein the first user input comprises a selection and/or identification of a data object type (also referred to as an object type).

7. The computer-implemented method of any of claims 4 to 6, wherein the first model input further includes a listing of one or more data processing services.

8. The computer-implemented method of claim 7, wherein the first model input further includes information regarding capabilities and/or functionality of each of the one or more data processing services.

9. The computer-implemented method of claim 7 or claim 8, further comprising:
by the one or more processors executing program instructions:
determining the listing of the one or more data processing services.

10. The computer-implemented method of claim 9, wherein the listing of the one or more data processing services is determined based at least in part on at least one of: a data object type associated with the first user input, a data object type derived from the first user input, a data object type selected by the user, the first user input, a context associated with the first user input, semantics and/or embeddings associated with the first user input and/or a context associated with the first user input, or a semantic search of the first user input and/or a context associated with the first user input.

11. The computer-implemented method of any of claims 7 to 10, wherein the first model input further includes a context associated with the first user input.

12. The computer-implemented method of claim 11, wherein the context associated with the first user input does not include actual data to be processed, but may include a schema or other metadata associated with the actual data to be processed.

13. The computer-implemented method of any of claims 4 to 12, wherein the first language model is configured, at least in part by the first model input, to select the first data processing service.

14. The computer-implemented method of any of claims 4 to 13, wherein providing the first model input to the first language model, receiving the first model output from the first language model, and determining the first service orchestrator, are performed by one or more orchestrator selectors, selection modules, and/or any combination thereof.

15. The computer-implemented method of any of claims 4 to 14, wherein the information associated with the first data processing service includes at least one of: information regarding functionality of the first data processing service, information regarding a query format associated with the first data processing service, or examples of formatted queries and/or data formats associated with the first data processing service.
